# EUROPEAN PATENT APPLICATION

(11) **EP 3 273 346 A1**
(43) Date of publication of application: **24.01.2018**
(21) Application number: 16764575.3
(22) Date of filing: 08.02.2016
(51) Int. Cl.: G06F 9/445, G06F 3/01, G06F 3/048, G06F 13/00

(54) **INFORMATION PROCESSING DEVICE, INFORMATION PROCESSING METHOD, AND COMPUTER PROGRAM**

(30) Priority: 19.03.2015 JP 2015055805
(71) Applicant: Sony Corporation, Tokyo 108-0075 (JP)
(72) Inventor: NAKATA, Daisuke, Tokyo 108-0075 (JP); OKAYAMA, Takahiro, Tokyo 108-0075 (JP); FUKAZAWA, Ryo, Tokyo 108-0075 (JP); YOSHITOMI, Kosuke, Tokyo 108-0075 (JP); HYODO, Katsuya, Tokyo 108-0075 (JP)
(74) Representative: MFG Patentanwälte Meyer-Wildhagen Meggle-Freund Gerhard PartG mbB
(86) International application number: PCT/JP2016/053674
(87) International publication number: WO 2016/147744

(57) **Abstract**

[Object] To provide an information processing device capable of changing operation to content matching a status of a user in accordance with presence/absence of the content in a user device.

[Solution] Provided is an information processing device including a control unit configured to, on the basis of information of content specified on the basis of non-operation information of a user and information on content stored on a user device used by the user, change processing content of the content specified on the basis of the non-operation information of the user.

## Description

### Technical Field

The present disclosure relates to an information processing device, an information processing method, and a computer program.

### Background Art

In a case where content (indicating a musical piece, an image, a video, an application, and other pieces of content provided in the form of digital data) is selected in a device, a user explicitly selects content by operating the device. Then, an instruction on operation to the selected content is given by the user to the device that displays and executes the content (see, for example, Patent Literature 1).

### Citation List

### Patent Literature

- Patent Literature 1:: JP 2011-53790A

### Disclosure of Invention

### Technical Problem

Devices for executing content have been diversified in recent years, and performance thereof has been improved and a size thereof has been reduced. Such devices are required to automatically select content matching a status of a user, instead of receiving an explicit instruction to display and execute content from the user, and change operation to the content in accordance with presence/absence of the content in a user device.

In view of this, the present disclosure proposes an information processing device, an information processing method, and a computer program, each of which is new, is improved, and is capable of changing operation to content matching a status of a user in accordance with presence/absence of the content in a user device.

### Solution to Problem

According to the present disclosure, there is provided an information processing device including a control unit configured to, on the basis of information of content specified on the basis of non-operation information of a user and information on content stored on a user device used by the user, change processing content of the content specified on the basis of the non-operation information of the user.

Further, according to the present disclosure, there is provided an information processing method including, on the basis of information of content specified on the basis of non-operation information of a user and information on content stored on a user device used by the user, changing processing content of the content specified on the basis of the non-operation information of the user.

Further, according to the present disclosure, there is provided a computer program for causing a computer to execute, on the basis of information of content specified on the basis of non-operation information of a user and information on content stored on a user device used by the user, changing processing content of the content specified on the basis of the non-operation information of the user.

### Advantageous Effects of Invention

As described above, according to the present disclosure, it is possible to provide an information processing device, an information processing method, and a computer program, each of which is new, is improved, and is capable of changing operation to content matching a status of a user in accordance with presence/absence of the content in a user device.

Further, the effects described in this specification are merely illustrative or exemplified effects, and are not limitative. That is, with or in the place of the above effects, the technology according to the present disclosure may achieve other effects that are clear to those skilled in the art from the description of this specification.

### Brief Description of Drawings

[FIG. 1] FIG. 1 is an explanatory view showing a functional configuration example of an information processing device 100 according to an embodiment of the present disclosure.
[FIG. 2] FIG. 2 is a flowchart showing an operation example of an information processing device 100 according to an embodiment of the present disclosure.
[FIG. 3] FIG. 3 is a flowchart showing an operation example of a content selection unit 130.
[FIG. 4] FIG. 4 is a flowchart showing an operation example of the content selection unit 130 and an external service 10.
[FIG. 5] FIG. 5 is a flowchart showing an operation example of the content selection unit 130 and the external service 10.
[FIG. 6] FIG. 6 is an explanatory view showing an example of a user interface.
[FIG. 7] FIG. 7 is an explanatory view showing an example of a user interface.
[FIG. 8] FIG. 8 is an explanatory view showing an example of a user interface.
[FIG. 9] FIG. 9 is a flowchart showing an operation example of the content selection unit 130.
[FIG. 10] FIG. 10 is a flowchart showing an operation example of the content selection unit 130 and the external service 10.
[FIG. 11] FIG. 11 is a flowchart showing an operation example of the content selection unit 130 and the external service 10.
[FIG. 12] FIG. 12 is an explanatory view showing an example of a user interface.
[FIG. 13] FIG. 13 is an explanatory view showing an example of a user interface.
[FIG. 14] FIG. 14 is an explanatory view showing an example of a user interface.
[FIG. 15] FIG. 15 is an explanatory view showing an example of a user interface.
[FIG. 16] FIG. 16 is an explanatory view showing an example of a user interface.
[FIG. 17] FIG. 17 is an explanatory view showing an example of a user interface.
[FIG. 18] FIG. 18 is a flowchart showing an operation example of a content starting unit 150.
[FIG. 19] FIG. 19 is a flowchart showing an operation example of the content starting unit 150.
[FIG. 20] FIG. 20 is a flowchart showing an operation example of the content starting unit 150.
[FIG. 21] FIG. 21 is a flowchart showing an operation example of the content starting unit 150.
[FIG. 22] FIG. 22 is a flowchart showing an operation example of the content starting unit 150.
[FIG. 23] FIG. 23 is an explanatory view showing a hardware configuration example.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Note that description will be provided in the following order.
1. Embodiment of present disclosure
   1.1. Background
   1.2. Functional configuration example
   1.3. Operation example
2. Hardware configuration example
3. Conclusion

### <1. Embodiment of present disclosure>

### [1.1. Background]

First, a background of an embodiment of the present disclosure will be described before detailed description of the embodiment of the present disclosure.

In a case where content (hereinafter, indicating a musical piece, an image, a video, text, an application, and other pieces of digital data) is selected in a device, a user explicitly selects content by operating the device. Then, an instruction on operation to the selected content is given by the user to the device that displays and executes the content.

Specifically, in order that, for example, the user causes the device to execute an application, the user takes the following action: the user searches an intended application from applications installed in the device and, in a case where the intended application is not installed, the user downloads the intended application from an external server into the device.

Such an action of the user with respect to the device is such that the user shows a behavioral intention of the user to the device. However, in order that the user shows the behavioral intention of the user to the device, the user himself/herself needs to grasp, in advance, by which content his/her behavioral intention can be realized.

An amount of content is continuously increased day by day. When the user successively adds pieces of content to a device used by the user, it is difficult to search an intended piece of content from pieces of content stored on the device. Further, a piece of content that achieves an intention of the user exists in pieces of content that have not been stored by the user on the device in some cases, and therefore searching such a piece of content is difficult for the user and is also inefficient.

In view of the above background, a disclosing party of the present disclosure has diligently studied a technology of acquiring information that is not obtained by a user's operation (non-operation information of the user), instead of information obtained as a result of the user's explicit operation, searching content matching the non-operation information of the user, and executing the content. As a result, the disclosing party of the present disclosure has devised a technology of acquiring non-operation information of a user, searching content matching the non-operation information of the user, and changing operation to the content in accordance with presence/absence of the content in a device used by the user (user device).

Hereinabove, the background of the embodiment of the present disclosure has been described. Next, the embodiment of the present disclosure will be described in detail.

### [1.2. Functional configuration example]

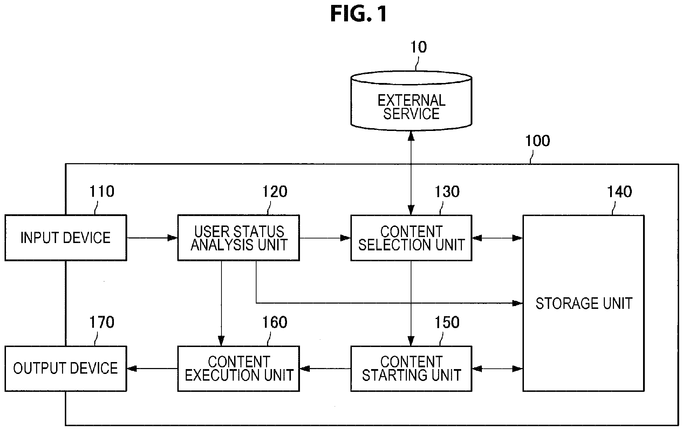

First, a functional configuration example of an information processing device 100 according to an embodiment of the present disclosure will be described. FIG. 1 is an explanatory view showing the functional configuration example of the information processing device 100 according to the embodiment of the present disclosure. Hereinafter, the functional configuration example of the information processing device 100 according to the embodiment of the present disclosure will be described with reference to FIG. 1.

The information processing device 100 shown in FIG. 1 is, for example, a smartphone (high-performance mobile phone), a wearable device (indicating a computer device for the purpose of being worn on a body of a user), or the like and is a device capable of acquiring a status of the user of the information processing device 100, searching content matching the status of the user, and executing the content.

As shown in FIG. 1, the information processing device 100 according to the embodiment of the present disclosure is configured to include an input device 110, a user status analysis unit 120, a content selection unit 130, a storage unit 140, a content starting unit 150, a content execution unit 160, and an output device 170.

The input device 110 is various input devices for accepting input from the user and can be made up of, for example, a keyboard, a mouse, or a touchscreen.

Further, various sensing devices can also function as the input device 110. The sensing devices can include, for example, sensors for acquiring a current position, such as a global positioning system (GPS), a global navigation satellite system (GLONASS), a BeiDou navigation satellite system (BDS), and iBeacon, a camera, a camera with depth information, a motion sensor, and a microphone.

Those sensing devices detect acceleration and an angular velocity of the device, a direction, an illuminance, a temperature, an atmospheric pressure, and the like. In a case where, for example, a device including the sensing devices is carried or worn by the user, the various sensing devices can detect various kinds of information as information on the user, for example, as information indicating movement and a direction of the user. In addition, the sensing devices may further include a sensor for detecting biological information on the user, such as a pulse, perspiration, a brain wave, a sense of touch, a sense of smell, and a sense of taste.

The input device 110 outputs information input from the user or generated by sensing to the user status analysis unit 120.

The user status analysis unit 120 analyzes a status of the user at that point of time (hereinafter, also referred to simply as "status of user") on the basis of the information transmitted from the input device 110. Specifically, for example, by using technologies such as behavior recognition, audio recognition, image recognition, and machine learning, the user status analysis unit 120 analyzes non-operation information that is not obtained by the user performing operation to the input device 110, the non-operation information including the status of the user, such as behavior, a position, an emotion, and a habit of the user. Then, the user status analysis unit 120 transmits the non-operation information of the user including an analysis result of the status of the user to the content selection unit 130 and the content execution unit 160.

Analysis of the status of the user by the user status analysis unit 120 is performed as follows, for example.

For example, the user status analysis unit 120 recognizes behavior of the user on the basis of a value of a change in movement of the body measured by sensors, such as acceleration and inclination. The user status analysis unit 120 recognizes, for example, a position of the user by determining the position with the use of values of latitude and longitude measured on the basis of GPS, iBeacon, or the like or a position measurement technology of, for example, whether or not the user approaches a predetermined place.

The user status analysis unit 120 recognizes, for example, an emotion of the user by measuring a biological status of the body, such as perspiration, a heart rate, and a blood flow. The user status analysis unit 120 recognizes, for example, a habit of the user by analyzing, with the use of a machine learning technology, recorded data of recognition of behavior, a position, an emotion, or the like, data in a service such as a schedule or an email, or data in an application such as a communication notebook or a memo pad.

The content selection unit 130 generates comparison information in which information of content specified on the basis of the non-operation information of the user including the analysis result of the status of the user is compared with information on content stored on the storage unit 140. Then, on the basis of the comparison information, the content selection unit 130 changes operation to the content specified on the basis of the non-operation information of the user. For example, in a case where the content specified on the basis of the non-operation information of the user is stored on the storage unit 140, the content selection unit 130 instructs the content starting unit 150 to start the content, and, in a case where the content is not stored thereon, the content selection unit 130 acquires the content from an external service 10. Therefore, the content selection unit 130 functions as an example of a control unit of the present disclosure.

When the content selection unit 130 acquires the non-operation information of the user obtained by the user status analysis unit 120, the content selection unit 130 determines content to be selected on the basis of the acquired non-operation information of the user. In a case of determining the content to be selected, the content selection unit 130 determines the content to be selected from content stored on the storage unit 140 and content provided by the external service 10. When the content selection unit 130 determines the content to be selected, the content selection unit 130 transmits information of the selected content to the content starting unit 150.

The external service 10 is a service for providing content to the information processing device 100 and can be configured as one or a plurality of server devices. Note that a single external service does not need to store all information, and the external service may search content in another external service.

The storage unit 140 stores content started by the content starting unit 150 and can be configured as, for example, a non-volatile memory such as a flash memory. The storage unit 140 stores, for example, a substance of content and information on a storage location (for example, URL) of the content. The storage unit 140 stores information from the content selection unit 130. The information stored on the storage unit 140 is referred to by the content selection unit 130 and the content starting unit 150. Further, content stored on the storage unit 140 can be deleted as necessary.

The content starting unit 150 reads out content selected by the content selection unit 130 from the storage unit 140 and starts the content. Further, in a case of terminating the content, the content starting unit 150 performs predetermined termination processing such as deletion of unnecessary data and recording that the content has been started. Further, in a case of starting or terminating the content, the content starting unit 150 also performs payment processing of a fee charged for the content as necessary.

Although operation of the content starting unit 150 will be described later in detail, brief description will be provided as follows. In a case where the content starting unit 150 reads out content from the storage unit 140 and starts the content, the content starting unit 150 changes processing to the content between a case where the content is selected by the content selection unit 130 on the basis of a status of the user and a case where the content is explicitly selected by the user. The content starting unit 150 can change a usable time and a timing at which processing for obtaining usage authorization of the content (for example, payment of a usage fee) is needed between, for example, a case where the content is selected by the content selection unit 130 on the basis of a status of the user and a case where the content is explicitly selected by the user. Therefore, the content starting unit 150 can also function as an example of the control unit of the present disclosure.

The content execution unit 160 presents a user interface (UI), audio, an image, or the like generated as a result of the content starting unit 150 starting the content to the user via the output device 170. In a case of executing the content, the content execution unit 160 executes transmission/reception of data to/from an external server as necessary.

The output device 170 is a device for presenting the UI, the audio, the image, or the like presented by the content execution unit 160 to the user and is made up of, for example, a display, a speaker, or a vibrator.

In the present embodiment, content encompasses an application, a still image data, moving image data, audio data, and the like. In the present embodiment, an "application (app.)" indicates a computer program that operates in the device and is for realizing a predetermined function. Further, in the present embodiment, a "Web application (Web app.)" is an application that is used via a network such as the Internet, operates in cooperation with a Web server on a browser layer, and is written by a language (JavaScript, HTML, or the like) which operates on the browser layer.

Note that the input device 110 and the output device 170 in the information processing device 100 shown in FIG. 1 may be devices separate from the information processing device 100.

The information processing device 100 according to the embodiment of the present disclosure has the configuration shown in FIG. 1, and therefore the information processing device 100 can acquire a status of a user and search content matching the status of the user and, in addition, can change operation to the content in accordance with presence/absence of the content in a device (user device) used by the user.

Hereinabove, the functional configuration example of the information processing device 100 according to the embodiment of the present disclosure has been described with reference to FIG. 1. Next, an operation example of the information processing device 100 according to the embodiment of the present disclosure will be described.

### [1.3. Operation example]

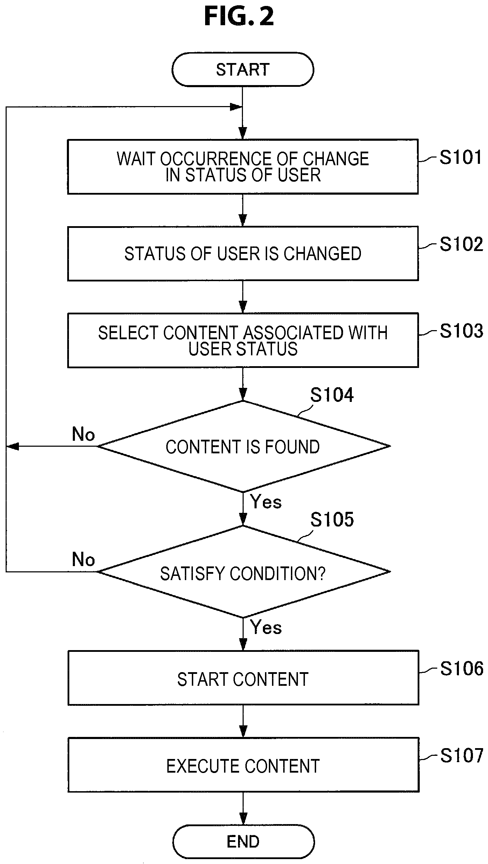

First, an outline of operation of the information processing device 100 according to the embodiment of the present disclosure will be described. FIG. 2 is a flowchart showing an operation example of the information processing device 100 according to the embodiment of the present disclosure. FIG. 2 shows a flowchart showing an operation example of the information processing device 100 performed in a case where content matching a status of the user is searched and the content is executed. Hereinafter, the operation example of the information processing device 100 according to the embodiment of the present disclosure will be described with reference to FIG. 2.

In a case where the information processing device 100 searches content matching a status of the user and executes the content, first, the information processing device 100 waits occurrence of a change in a status of the user (Step S101). Then, in a case where the status of the user is changed (Step S102), the information processing device 100 selects content matching the status of the user (Step S103).

The information processing device 100 determines whether or not the content matching the status of the user has been found (Step S104), and, in a case where the content matching the status of the user has not been found (Step S104, No), the information processing device 100 returns to the processing for waiting occurrence of a change in the status of the user in Step S101. On the contrary, in a case where the content matching the status of the user has been found (Step S104, Yes), the information processing device 100 determines whether or not the content satisfies a condition (Step S105). In a case where the content does not satisfy the condition (Step S105, No), the information processing device 100 returns to the processing for waiting occurrence of a change in the status of the user in Step S101. On the contrary, in a case where the content satisfies the condition (Step S105, Yes), then the information processing device 100 starts the content (Step S106) and executes the started content (Step S107).

In the series of processing shown in FIG. 2, the processing in Steps S101 and S102 is executed by, for example, the user status analysis unit 120, and the processing in Step S103 to Step S105 is executed by, for example, the content selection unit 130, the processing in Step S106 is executed by, for example, the content starting unit 150, and the processing in Step S107 is executed by, for example, the content execution unit 160.

Then, the information processing device 100 can cause processing content of the content started in Step S106 to be different from processing content performed in a case where the content is explicitly selected by the user. Although specific processing will be described later, the information processing device 100 can change a timing at which payment of a usage fee is needed between, for example, a case where the content is selected by the processing in Step S103 on the basis of the status of the user and the content is explicitly selected by the user.

Hereinabove, the operation example of the information processing device 100 according to the embodiment of the present disclosure has been described with reference to FIG. 2. Next, a detailed operation example of the information processing device 100 according to the embodiment of the present disclosure will be described.

First, an operation example of the content selection unit 130 will be described. On the basis of an analysis result of a status of the user transmitted from the user status analysis unit 120, the content selection unit 130 searches a piece of content matching the status of the user from pieces of contents stored on the storage unit 140. In order that a piece of content matching the status of the user can be searched from the pieces of content stored on the storage unit 140, for example, the content selection unit 130 desirably writes, to the content, in which status of the user the content is to be started.

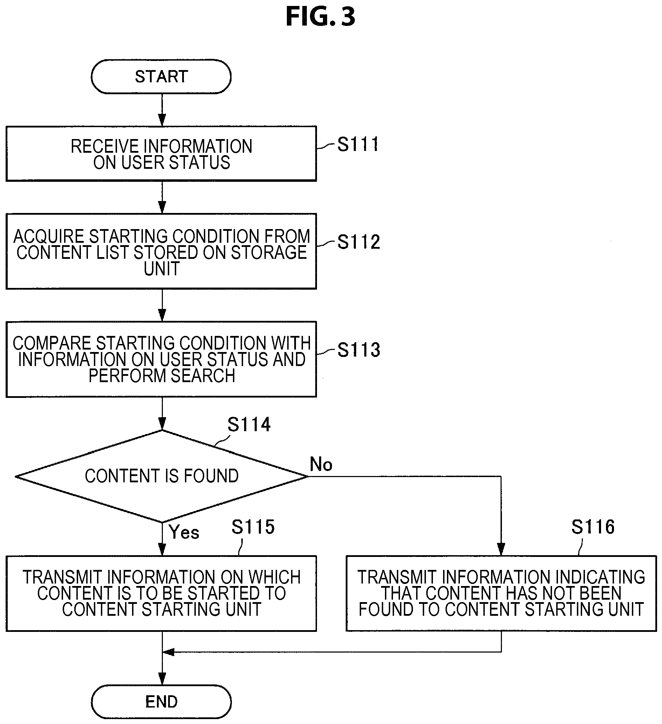

FIG. 3 is a flowchart showing an operation example of the content selection unit 130 in the information processing device 100 according to the embodiment of the present disclosure. Hereinafter, the operation example of the content selection unit 130 will be described with reference to FIG. 3.

When the content selection unit 130 receives information on a status of the user from the user status analysis unit 120 (Step S111), the content selection unit 130 acquires a starting condition of content from a list of the pieces of content stored on the storage unit 140 (Step S112).

Then, the content selection unit 130 compares the acquired starting condition of content with the information on the status of the user and searches a piece of content matching the status of the user from the pieces of content stored on the storage unit 140 (Step S113). As a result of the search processing in Step S113, the content selection unit 130 determines whether or not a piece of content matching the status of the user has been found from the pieces of content stored on the storage unit 140 (Step S114).

As a result of the determination in Step S114, in a case where a piece of content matching the status of the user has been found from the pieces of content stored on the storage unit 140 (Step S114, Yes), the content selection unit 130 transmits, to the content starting unit 150, information on which piece of content is to be started (Step S115).

On the contrary, as a result of the determination in Step S114, in a case where a piece of content matching the status of the user has not been found from the pieces of content stored on the storage unit 140 (Step S114, No), the content selection unit 130 transmits, to the content starting unit 150, information indicating that a piece of content matching the status of the user has not been found (Step S116).

By executing the series of operation shown in FIG. 3, the content selection unit 130 can select a piece of content matching a status of the user from the pieces of content stored on the storage unit 140. Note that, in a case where the content selection unit 130 selects content, a characteristic of the information processing device 100 may be considered. The characteristic of the information processing device 100 can include, for example, the kind of the information processing device 100, a use purpose of the information processing device 100, the kind of device included in the output device 170, and, in a case where the output device 170 includes a display, a screen size of the display. The kind of the information processing device 100 can be a personal computer, a smartphone, a wearable terminal, a head-mounted display, or the like. The use purpose of the information processing device 100 can be, for example, a business use or a personal use.

Also in a case where the information processing device 100 is used by a plurality of users, the content selection unit 130 may select content matching statuses of the plurality of users, which is similar to a case where the information processing device 100 is used by a single user.

In the example shown in FIG. 3, in a case where a piece of content matching the status of the user is not found from the pieces of content stored on the storage unit 140, the content selection unit 130 transmits, to the content starting unit 150, information indicating that content matching the status of the user has not been found. An example described next shows a case where, in a case where a piece of content matching a status of the user is not found from the pieces of content stored on the storage unit 140, the content selection unit 130 acquires a piece of content matching the status of the user from the external service 10.

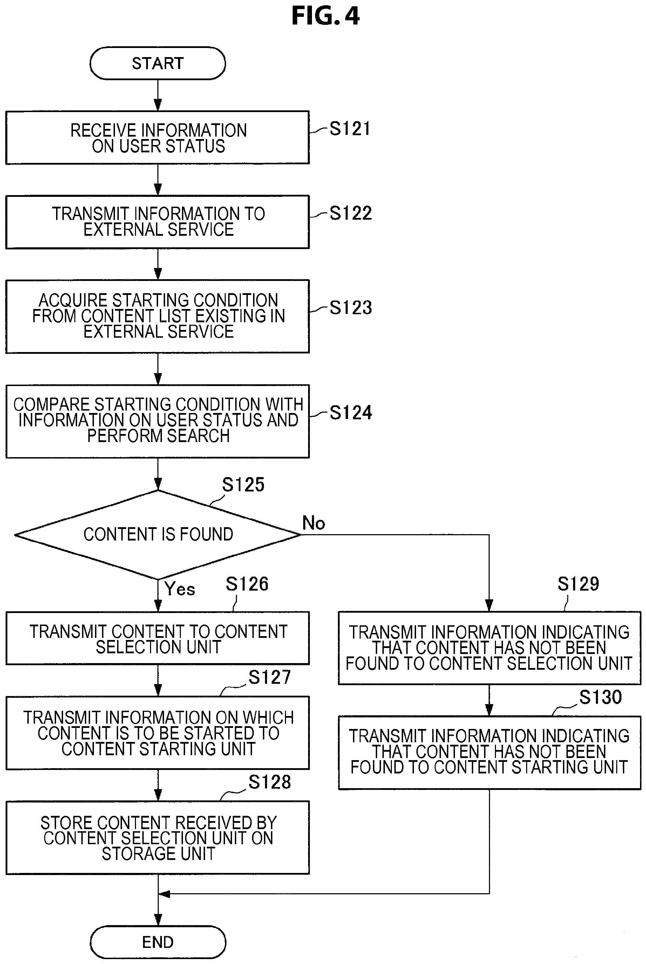

FIG. 4 is a flowchart showing an operation example of the content selection unit 130 and the external service 10 in the information processing device 100 according to the embodiment of the present disclosure. FIG. 4 shows the operation example of the content selection unit 130 and the external service 10 performed in a case where a piece of content matching a status of the user is not found from the pieces of content stored on the storage unit 140. Hereinafter, the operation example of the content selection unit 130 and the external service 10 will be described with reference to FIG. 4.

When the content selection unit 130 receives information on a status of the user from the user status analysis unit 120 (Step S121), the content selection unit 130 transmits the received information on the status of the user to the external service 10 (Step S122).

Then, the external service 10 acquires a starting condition of content from a content list existing in the external service 10 (Step S123). Then, the external service 10 compares the acquired starting condition of content with the information on the status of the user and searches a piece of content matching the status of the user from pieces of content existing in the external service 10 (Step S124). As a result of the search processing in Step S124, the external service 10 determines whether or not a piece of content matching the status of the user has been found from the pieces of content existing in the external service 10 (Step S125).

As a result of the determination in Step S125, in a case where a piece of content matching the status of the user has been found from the pieces of content existing in the external service 10 (Step S125, Yes), the external service 10 transmits the found piece of content to the content selection unit 130 (Step S126). Then, the content selection unit 130 transmits, to the content starting unit 150, information on which piece of content is to be started (Step S127) and stores the piece of content received from the external service 10 on the storage unit 140 (Step S128).

On the contrary, as a result of the determination in Step S125, in a case where a piece of content matching the status of the user has not been found from the pieces of content existing in the external service 10 (Step S125, No), the external service 10 transmits, to the content selection unit 130, information indicating that a piece of content matching the status of the user has not been found (Step S129). Then, the content selection unit 130 transmits, to the content starting unit 150, information indicating that a piece of content matching the status of the user has not been found (Step S130).

The content selection unit 130 and the external service 10 execute the series of operation shown in FIG. 4, and therefore, in a case where a piece of content matching a status of the user is not found from the pieces of content stored on the storage unit 140, the content selection unit 130 can acquire the piece of content matching the status of the user from the external service 10.

In a case where the content matching the status of the user is a Web application, the content selection unit 130 acquires information on a location (URL) of the Web application from the external service 10.

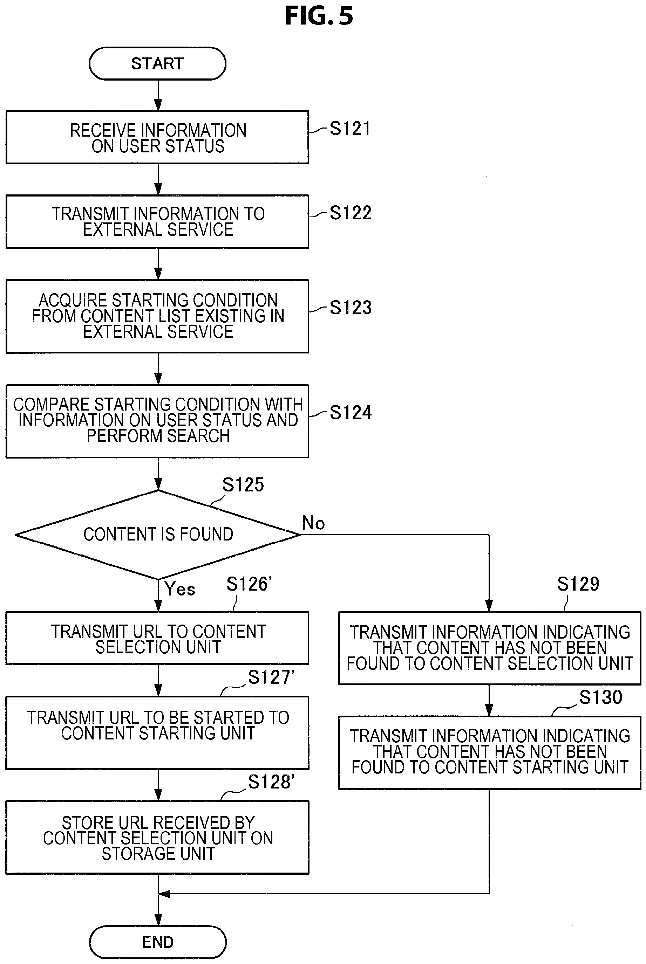

FIG. 5 is a flowchart showing an operation example of the content selection unit 130 and the external service 10 in the information processing device 100 according to the embodiment of the present disclosure. FIG. 5 shows the operation example of the content selection unit 130 and the external service 10 performed in a case where a piece of content matching a status of the user is not found from the pieces of content stored on the storage unit 140. Hereinafter, the operation example of the content selection unit 130 and the external service 10 will be described with reference to FIG. 5.

When the content selection unit 130 receives information on a status of the user from the user status analysis unit 120 (Step S121), the content selection unit 130 transmits the received information on the status of the user to the external service 10 (Step S122).

Then, the external service 10 acquires a starting condition of content from a content list existing in the external service 10 (Step S123). Then, the external service 10 compares the acquired starting condition of content with the information on the status of the user and searches a piece of content matching the status of the user from the pieces of content existing in the external service 10 (Step S124). As a result of the search processing in Step S124, the external service 10 determines whether or not a piece of content matching the status of the user has been found from the pieces of content existing in the external service 10 (Step S125). Hereinafter, description will be provided by assuming that a piece of content matching a status of the user is a Web application.

As a result of the determination in Step S125, in a case where a piece of content matching the status of the user has been found from the pieces of content existing in the external service 10 (Step S125, Yes), the external service 10 transmits, to the content selection unit 130, information on a location (URL) of the found piece of content (Step S126'). Then, the content selection unit 130 transmits, to the content starting unit 150, the information on the location (URL) of the piece of content to be started (Step S127') and stores the information on the location (URL) of the piece of content received from the external service 10 on the storage unit 140 (Step S128').

On the contrary, as a result of the determination in Step S125, in a case where a piece of content matching the status of the user has not been found from the pieces of content existing in the external service 10 (Step S125, No), the external service 10 transmits, to the content selection unit 130, information indicating that a piece of content matching the status of the user has not been found (Step S129). Then, the content selection unit 130 transmits, to the content starting unit 150, information indicating that a piece of content matching the status of the user has not been found (Step S130).

The content selection unit 130 and the external service 10 execute the series of operation shown in FIG. 5, and therefore, in a case where a piece of content matching a status of the user is not found from the pieces of content stored on the storage unit 140, the content selection unit 130 can acquire information on a location (URL) of a Web application matching the status of the user from the external service 10.

As described above, the content selection unit 130 can acquire content matching a status of the user from the storage unit 140 or the external service 10. However, the user does not necessarily desire to automatically start all pieces of content. Therefore, the information processing device 100 according to the present embodiment may cause the user to set a selection condition to the content selection unit 130 in advance. The content selection unit 130 selects content matching the set selection condition.

The selection condition set by the user is, for example, the number of people who reviewed content, review evaluations of the content, the number of times of downloading the content, a price of the content (charged or free), a target age of the content, a language of the content, a developer (individual, corporation, or the like) of the content, a release date of the content or the number of days after a release thereof, or whether or not the content is used by a user resembling the user on the basis of an age, a sex, a residential area, a habit, or the like. As a matter of course, the information processing device 100 according to the present embodiment may not only cause the user to set a selection condition to the content selection unit 130 in advance but also may set a basic condition to the content selection unit 130 in advance.

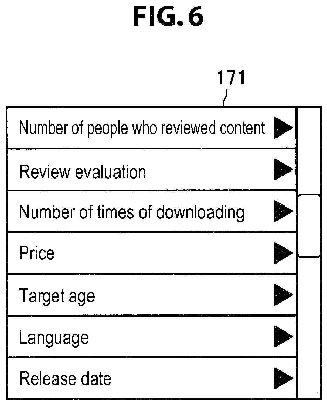

FIGS. 6 to 8 are explanatory views showing examples of a user interface for causing the user to set a selection condition to the content selection unit 130. The user interfaces shown in FIGS. 6 to 8 are displayed on, for example, the output device 170. The user can operate the user interfaces shown in FIGS. 6 to 8 by using the input device 110.

FIG. 6 is an explanatory view showing an example of a user interface 171 that displays a condition list. The user can select a condition by operating the user interface 171 displayed as in FIG. 6.

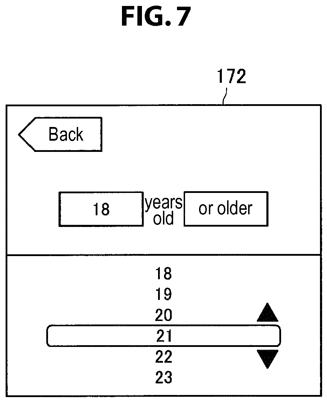

FIG. 7 is an explanatory view showing an example of a user interface 172 for causing the user to set a condition of a target age of content that is automatically started in a case where "Target age" is selected by the user on the user interface 171 that displays the condition list. The example in FIG. 7 shows the user interface 172 in which the following is set as a condition: the target age of the content that is automatically started is 18 or more.

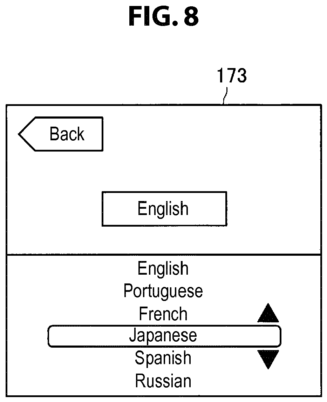

FIG. 8 is an explanatory view showing an example of a user interface 173 for causing the user to set a condition of a language of content that is automatically started in a case where "Language" is selected by the user on the user interface 171 that displays the condition list. The example in FIG. 8 shows an example of the user interface 173 in which the following is set as a condition: the language of the content that is automatically started is English.

The information processing device 100 can cause the user to set a selection condition to the content selection unit 130 in advance by outputting the user interfaces shown in FIGS. 6 to 8.

The content selection unit 130 can acquire a piece of content matching a status of the user from the storage unit 140 or the external service 10. However, the number of pieces of content matching a status of the user is not limited to a single piece of content, and it is also considered that a plurality of pieces of content matching the status of the user exist. In a case where a plurality of pieces of content matching the status of the user exist, the content selection unit 130 may determine that a single piece of content is selected from the plurality of pieces of content. In addition, in a case where a plurality of pieces of content matching a status of the user exist, a condition for determining a single piece of content from a plurality of pieces of content may be set in the content selection unit 130 in advance.

The condition for determining a single piece of content from a plurality of pieces of content is, for example, a review evaluation of content, the number of times of downloading the content, a release date of the content (order from the newest content or order from the oldest content), a past usage history of the content, a price of the content (charged or free), a degree of emergency, or a size of the content.

In addition, the information processing device 100 according to the present embodiment may cause the user to set a condition for determining a single piece of content from a plurality of pieces of content to the content selection unit 130 in advance. In a case where a plurality of pieces of content matching a status of the user exist, the content selection unit 130 determines a single piece of content from the plurality of pieces of content on the basis of the set condition.

Further, the content selection unit 130 may select a single piece of content from a plurality of pieces of content on the basis of a characteristic of the user of the information processing device 100. For example, in a case where a fact that the user of the information processing device 100 is a woman in her twenties is registered in the information processing device 100 in advance, the content selection unit 130 may determine that, in a case of selecting a single piece of content from a plurality of pieces of content, a piece of content favored by women in their twenties is selected.

In a case where a plurality of pieces of content matching a status of the user exist, the content selection unit 130 may determine that, instead of a single piece of content, a plurality of pieces of content are selected from a plurality of pieces of content. In a case where a plurality of pieces of content matching a status of the user exist, the content selection unit 130 may select one or some pieces of content matching a predetermined condition therefrom or may select all the pieces of content.

The content selection unit 130 may determine whether to select a plurality of pieces of content on the basis of user setting or setting determined in the information processing device 100 in advance. Further, the content selection unit 130 may determine the number of pieces of content to be selected on the basis of user setting or setting determined in the information processing device 100 in advance or may determine the number of pieces of content to be selected on the basis of a capacity of the storage unit 140, a throughput of the content execution unit 160, or the like.

In a case where the content selection unit 130 selects a plurality of pieces of content, a condition for determining order of starting those pieces of content is, for example, a review evaluation of the content, the number of times of downloading the content, a release date of the content (order from the newest content or order from the oldest content), a past usage history of the content, a price of the content (charged or free), a degree of emergency, or a size of the content.

Information on association with another device may be transmitted from the user status analysis unit 120 to the content selection unit 130. The information on association with another device is, for example, information of content executed in another device. Then, the content selection unit 130 may determine content to be selected on the basis of the information on association with another device. By determining content to be selected on the basis of the information on association with another device, the content selection unit 130 can restrain similar pieces of content from being simultaneously executed by a plurality of devices.

The user possesses a plurality of information processing devices 100 having the above configuration in some cases. In a case where the user possesses the plurality of information processing devices 100 as described above, in order to acquire content and start the content, the information processing device 100 may change in which information processing device 100 the content is to be started in accordance with characteristics of the information processing devices 100. For example, the information processing device 100 may determine which content is to be started in which device in consideration of, for example, functions or characteristics of hardware that own device and another device have.

Further, in a case where the user possesses a plurality of information processing devices 100, it is not desirable that the same content be simultaneously executed by the plurality of information processing devices 100. Therefore, it is desirable that the information processing devices 100 can determine which content is to be started in which device. For example, in a case where the user possesses a wrist-watch type device and a smartphone as the information processing device 100 and the information processing devices 100 determine that a running application and a music reproduction application are to be executed on the basis of a status of the user, the information processing devices 100 may determine that the running application is executed by the wrist-watch type device and the music play application is executed by the smartphone.

In a case where the user possesses a plurality of information processing devices 100 and the information processing devices 100 are set to be associated with each other in advance, the information processing devices 100 may communicate with each other in a case of determining which content is to be started in which device. On the contrary, in a case where the information processing devices 100 are not set to be associated with each other in advance, each of the information processing devices 100 may determine which content is to be started in which device by, for example, communicating with the external service 10.

In a case where, for example, the content selection unit 130 selects content from the storage unit 140 or the external service 10, content that is currently executed in another device or content in the same category as a category to which the content that is currently executed in another device belongs may be excluded from a target to be selected even in a case where the content is content matching a status of the user. In a case where the content selection unit 130 searches content from the storage unit 140, the content selection unit 130 may exclude, from a target to be searched, content that is currently executed in another device and the same category as a category to which the content that is currently executed in another device belongs. Further, in a case where the content selection unit 130 searches content from the external service 10, the content selection unit 130 may instruct the external service 10 to exclude, from a target to be searched, content that is currently executed in another device and the same category as a category to which the content that is currently executed in another device belongs.

For example, in a case where the user enters a bookstore by using a smartphone and an eyeglasses-type wearable device as the information processing device 100, the eyeglasses-type wearable device determines that the user has entered the bookstore and the eyeglasses-type wearable device automatically starts a book review app. Then, the smartphone is notified from the eyeglasses-type wearable device that the eyeglasses-type wearable device has started the book review app. In view of this, the smartphone excludes the book review app. from a target to be searched even in a case where the book review app. is content matching a status of the user because the user enters the bookstore.

In a case where the user uses a plurality of information processing devices 100, it is also considered that the information processing devices 100 are not associated with each other. In that case, the information processing device 100 can determine that the user uses another device on the basis of information on access to the external service 10.

As described above, in a case where a piece of content matching a status of the user is not found from the pieces of content stored on the storage unit 140, the content selection unit 130 can acquire the content matching the status of the user from the external service 10. In addition, the content selection unit 130 may acquire information on which content has been selected by another device used by the same user from the another device or the external service 10. By acquiring the information on which content has been selected by another device used by the same user from the another device or the external service 10, the content selection unit 130 can exclude the content and content in a category to which the content belongs from a target to be searched.

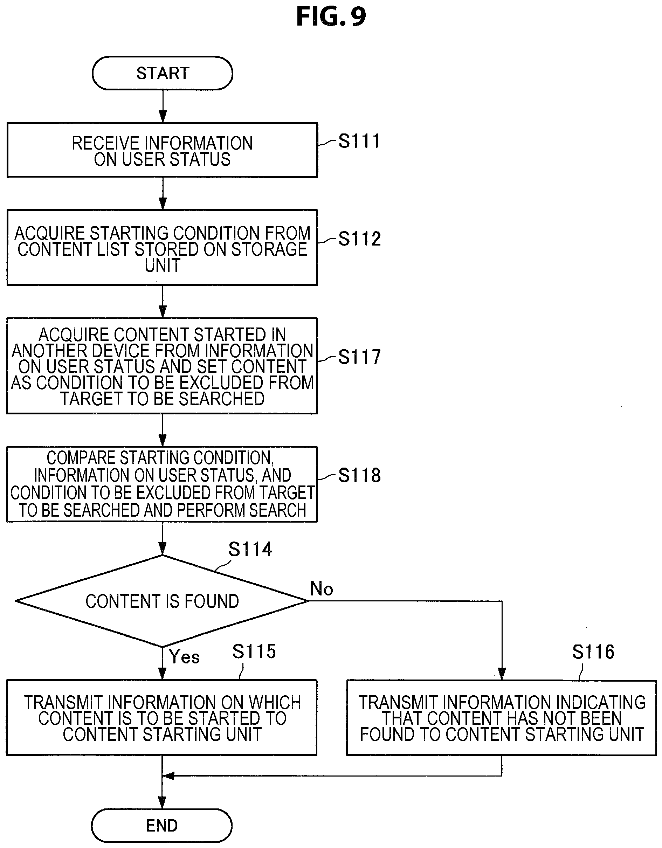

FIG. 9 is a flowchart showing an operation example in the content selection unit 130 of the information processing device 100 according to the embodiment of the present disclosure. FIG. 9 shows an operation example of the content selection unit 130 performed in a case where, in a case of searching content from the storage unit 140, information on which content has been selected by another device used by the same user is acquired from the another device or the external service 10 and the content is excluded from a target to be searched. Hereinafter, the operation example of the content selection unit 130 will be described with reference to FIG. 9.

When the content selection unit 130 receives information on a status of the user from the user status analysis unit 120 (Step S111), the content selection unit 130 acquires a starting condition of content from a list of pieces of content stored on the storage unit 140 (Step S112). Herein, it is assumed that the information on a status of the user includes information on which content has been selected by another device used by the same user.

Then, the content selection unit 130 acquires information of content started in the another device used by the same user from the information on the status of the user and sets the content as a condition to be excluded from a target to be searched (Step S117). Then, the content selection unit 130 compares the acquired starting condition of content, the information on the status of the user, and the condition to be excluded from a target to be searched with one another and searches a piece of content matching the status of the user from the pieces of content stored on the storage unit 140 (Step S118).

Then, as a result of the search processing in Step S118, the content selection unit 130 determines whether or not a piece of content matching the status of the user has been found from the pieces of content stored on the storage unit 140 (Step S114).

As a result of the determination in Step S114, in a case where a piece of content matching the status of the user has been found from the pieces of content stored on the storage unit 140 (Step S114, Yes), the content selection unit 130 transmits, to the content starting unit 150, information on which piece of content is to be started (Step S115).

On the contrary, as a result of the determination in Step S114, in a case where a piece of content matching the status of the user has not been found from the pieces of content stored on the storage unit 140 (Step S114, No), the content selection unit 130 transmits, to the content starting unit 150, information indicating that a piece of content matching the status of the user has not been found (Step S116).

By executing the series of operation shown in FIG. 9, the content selection unit 130 can exclude a piece of content executed by another device used by the same user from the pieces of content stored on the storage unit 140 and then select a piece of content matching the status of the user.

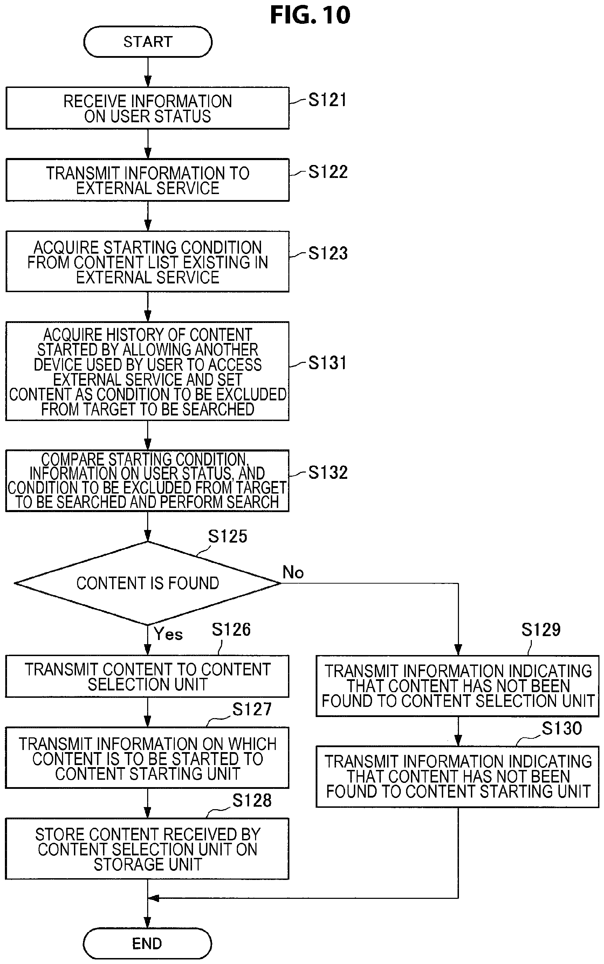

FIG. 10 is a flowchart showing an operation example of the content selection unit 130 and the external service 10 in the information processing device 100 according to the embodiment of the present disclosure. FIG. 10 shows the operation example of the content selection unit 130 and the external service 10 performed in a case where a piece of content matching the status of the user is not found from the pieces of content stored on the storage unit 140. Further, FIG. 10 shows the operation example where information on which content has been selected by another device used by the same user is acquired from the another device or the external service 10 and the content is excluded from a target to be searched. Hereinafter, the operation example of the content selection unit 130 and the external service 10 will be described with reference to FIG. 10.

When the content selection unit 130 receives information on a status of the user from the user status analysis unit 120 (Step S121), the content selection unit 130 transmits the received information on the status of the user to the external service 10 (Step S122).

Then, the external service 10 acquires a starting condition of content from a content list existing in the external service 10 (Step S123). Then, the external service 10 acquires a history of a piece of content started by allowing another device used by the same user to access the external service 10 and sets the started piece of content as a condition to be excluded from a target to be searched (Step S131). Then, the external service 10 compares the acquired starting condition of content, the information on the status of the user, and the condition to be excluded from a target to be searched with one another and searches a piece of content matching the status of the user from the pieces of content existing in the external service 10 (Step S132).

As a result of the search processing in Step S132, the external service 10 determines whether or not a piece of content matching the status of the user has been found from the pieces of content existing in the external service 10 (Step S125).

As a result of the determination in Step S125, in a case where a piece of content matching the status of the user has been found from the pieces of content existing in the external service 10 (Step S125, Yes), the external service 10 transmits the found piece of content to the content selection unit 130 (Step S126). Then, the content selection unit 130 transmits, to the content starting unit 150, information on which piece of content is to be started (Step S127) and stores the piece of content received from the external service 10 on the storage unit 140 (Step S128).

On the contrary, as a result of the determination in Step S125, in a case where a piece of content matching the status of the user has not been found from the pieces of content existing in the external service 10 (Step S125, No), the external service 10 transmits, to the content selection unit 130, information indicating that a piece of content matching the status of the user has not been found (Step S129). Then, the content selection unit 130 transmits, to the content starting unit 150, information indicating that a piece of content matching the status of the user has not been found (Step S130).

The content selection unit 130 and the external service 10 execute the series of operation shown in FIG. 10, and therefore, in a case where a piece of content matching the status of the user is not found from the pieces of content stored on the storage unit 140, the content selection unit 130 can acquire the piece of content matching the status of the user from the external service 10. Further, by executing the series of operation shown in FIG. 10, the content selection unit 130 and the external service 10 can acquire information on which content has been selected by another device used by the same user and exclude the content from a target to be searched.

In a case where the piece of content matching the status of the user is a Web application, the content selection unit 130 acquires information on a location (URL) of the Web application from the external service 10.

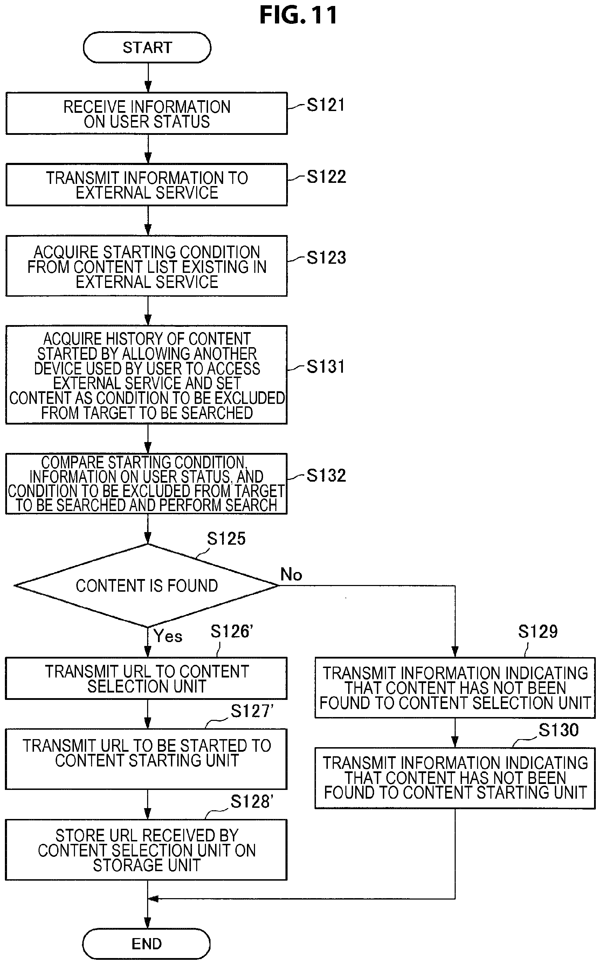

FIG. 11 is a flowchart showing an operation example of the content selection unit 130 and the external service 10 in the information processing device 100 according to the embodiment of the present disclosure. FIG. 11 shows the operation example of the content selection unit 130 and the external service 10 performed in a case where a piece of content matching a status of the user is not found from the pieces of content stored on the storage unit 140. Further, FIG. 11 shows the operation example where information on which content has been selected by another device used by the same user is acquired from the another device or the external service 10 and the content is excluded from a target to be searched. Hereinafter, the operation example of the content selection unit 130 and the external service 10 will be described with reference to FIG. 11.

When the content selection unit 130 receives information on a status of the user from the user status analysis unit 120 (Step S121), the content selection unit 130 transmits the received information on the status of the user to the external service 10 (Step S122).

Then, the external service 10 acquires a starting condition of content from a content list existing in the external service 10 (Step S123). Then, the external service 10 acquires a history of a piece of content started by allowing another device used by the same user to access the external service 10 and sets the started piece of content as a condition to be excluded from a target to be searched (Step S131). Then, the external service 10 compares the acquired starting condition of content, the information on the status of the user, and the condition to be excluded from a target to be searched with one another and searches a piece of content matching the status of the user from the pieces of content existing in the external service 10 (Step S132).

As a result of the search processing in Step S132, the external service 10 determines whether or not a piece of content matching the status of the user has been found from the pieces of content existing in the external service 10 (Step S125). Hereinafter, description will be provided by assuming that the piece of content matching the status of the user is a Web application.

As a result of the determination in Step S125, in a case where a piece of content matching the status of the user has been found from the pieces of content existing in the external service 10 (Step S125, Yes), the external service 10 transmits information on a location (URL) of the found piece of content to the content selection unit 130 (Step S126'). Then, the content selection unit 130 transmits, to the content starting unit 150, the information on the location (URL) of the piece of content to be started (Step S127') and stores the information on the location (URL) of the piece of content received from the external service 10 on the storage unit 140 (Step S128').

On the contrary, as a result of the determination in Step S125, in a case where a piece of content matching the status of the user has not been found from the pieces of content existing in the external service 10 (Step S125, No), the external service 10 transmits, to the content selection unit 130, information indicating that a piece of content matching the status of the user has not been found (Step S129). Then, the content selection unit 130 transmits, to the content starting unit 150, information indicating that a piece of content matching the status of the user has not been found (Step S130).

In a case where the content selection unit 130 and the external service 10 execute the series of operation shown in FIG. 5 and a piece of content matching the status of the user is not found from the pieces of content stored on the storage unit 140, the content selection unit 130 can acquire information on a location (URL) of a Web application matching the status of the user from the external service 10. Further, by executing the series of operation shown in FIG. 11, the content selection unit 130 and the external service 10 can acquire information on which content has been selected by another device used by the same user and exclude the content from a target to be searched.

As described above, the content selection unit 130 may select a plurality of pieces of content. In a case where the content selection unit 130 selects a plurality of pieces of content, the content selection unit 130 may use badness of compatibility between pieces of content as a condition to be excluded from a target to be searched. Even in a case where a plurality of pieces of content having a similar function or a plurality of pieces of content belonging to a similar genre exist in the information processing device 100, it is highly possible that the user of the information processing device 100 only needs a single piece of content among those pieces of content. In addition, it is highly possible that a piece of content that the user does not need is not used. Therefore, it may be determined that the plurality of pieces of content having the similar function and the pieces of content belonging to the similar genre may have bad compatibility. For example, the following cases are considered as bad compatibility between pieces of content.

### • Combination of pieces of content in the same category (genre)

For example, a baseball application and a soccer application, both of which belong to a sport category, have bad compatibility.

### • Combinations of pieces of content having the same function

For example, a running application and a map application, both of which have a function of navigating a current position, have bad compatibility.

### • Difference in language

For example, a piece of content prepared in Japanese and a piece of content prepared in English have bad compatibility.

For example, the content selection unit 130 may determine compatibility depending on whether or not pieces of content belong to the same category (genre), may determine, on the basis of a usage history of another user, compatibility depending on whether or not a plurality of pieces of content have been simultaneously used in a case of starting the plurality of pieces of content (for example, it may be determined that compatibility is bad in a case where the pieces of content have not been simultaneously used and have been immediately terminated), may determine compatibility on the basis of information written in pieces of content, or may determine compatibility depending on whether or not pieces of content are written in different languages.

As to such starting a piece of content considering compatibility between pieces of content, the information processing device 100 according to the present embodiment may not only cause the user to set a condition to the content selection unit 130 in advance but also may set a basic condition to the content selection unit 130 in advance.

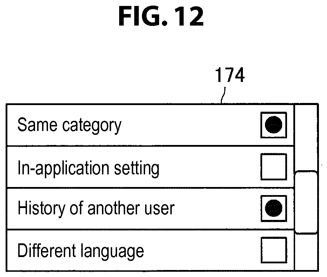

FIG. 12 is an explanatory view showing an example of a user interface 174 for causing the user to set pieces of content that are not simultaneously selected to the content selection unit 130. The user interface shown in FIG. 12 is displayed on, for example, the output device 170. The user operates the user interface shown in FIG. 12 by using the input device 110.

In the user interface 174 shown in FIG. 12, "Same category", "In-application setting", "History of another user", and "Different language" are shown as a condition in which pieces of content are not simultaneously selected.

In a case where "Same category" is selected on the user interface 174 shown in FIG. 12, pieces of content in the same category are not simultaneously selected. In a case where "In-application setting" is selected on the user interface 174 shown in FIG. 12, whether or not pieces of content are simultaneously selected depends on setting in applications. In a case where "History of another user" is selected on the user interface 174 shown in FIG. 12, pieces of content that have not been simultaneously selected by another user are not simultaneously selected. In a case where "Different language" is selected on the user interface 174 shown in FIG. 12, pieces of content prepared in different languages are not simultaneously selected.

As a matter of course, a condition in which pieces of content are not simultaneously selected by the content selection unit 130, which is set by the user, is not limited to the conditions shown in FIG. 12.

As described above, the content selection unit 130 may select a plurality of pieces of content. However, there is a case where, depending on a status of the user, it is desirable that a plurality of pieces of content be not selected even if a plurality of pieces of content can be selected. For example, the user cannot consider an application other than a running application while the user is running at full speed. Further, for example, an application other than a learning support application for supporting learning is unnecessary while the user is studying because the user is distracted. In view of this, the content selection unit 130 may determine whether to select a plurality of pieces of content by using information on a status of the user transmitted from the user status analysis unit 120.

Examples of a parameter serving as a condition in which the content selection unit 130 determines whether to select a plurality of pieces of content are as follows.

The content selection unit 130 may use, for example, biological information of the user as the parameter. The biological information of the user can include, for example, information such as a heart rate and a perspiration amount of the user. Such biological information of the user can be sensed by, for example, sensors included in the input device 110, the sensors being for detecting the biological information of the user such as a pulse, perspiration, a brain wave, a sense of touch, a sense of smell, and a sense of taste.

The content selection unit 130 may use, for example, the kind of status of the user as the parameter. Examples of the kind of status of the user can be, for example, during sport, during walking, and during driving. Those statuses of the user can be determined by, for example, the sensors included in the input device 110, the sensors being for sensing acceleration and an angular velocity, or on the basis of sound collected by a microphone.

The content selection unit 130 may use, for example, an emotion of the user as the parameter. Examples of the emotion of the user can be, for example, anger and sadness. Those emotions of the user can be determined on the basis of, for example, information sensed by the sensors included in the input device 110, the sensors being for detecting the biological information of the user such as a pulse, perspiration, a brain wave, a sense of touch, a sense of smell, and a sense of taste.

Regarding a condition of determining whether to select a plurality of pieces of content, the information processing device 100 according to the present embodiment may not only cause the user to set the condition to the content selection unit 130 in advance but also may set a basic condition to the content selection unit 130 in advance.

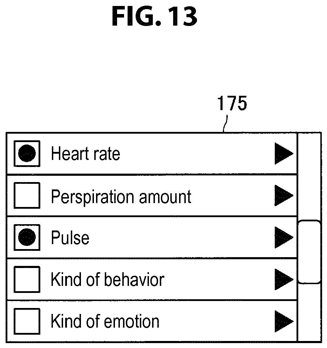

FIGS. 13 to 15 are explanatory views showing examples of a user interface for causing the user to set a condition of determining whether to select a plurality of pieces of content to the content selection unit 130. The user interfaces shown in FIGS. 13 to 15 are displayed on, for example, the output device 170. The user operates the user interfaces shown in FIGS. 13 to 15 by using the input device 110.

FIG. 13 is an explanatory view showing an example of a user interface 175 that displays a list of conditions of determining whether to select a plurality of pieces of content. The user can select a condition by operating the user interface 175 displayed as in FIG. 13. FIG. 13 shows a state in which "Heart rate" and "Pulse" are selected as the condition of determining whether to select a plurality of pieces of content.

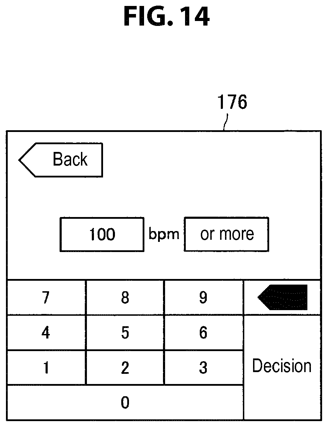

FIG. 14 is an explanatory view showing an example of the user interface 175 that causes the user to set a condition of a heart rate in a case where "Heart rate" is selected by the user on the user interface 174 that displays the list of conditions. The example in FIG. 14 shows the user interface 175 in which the following is set as a condition: a plurality of pieces of content should not be selected in a case where the heart rate of the user is 100 bpm or more.

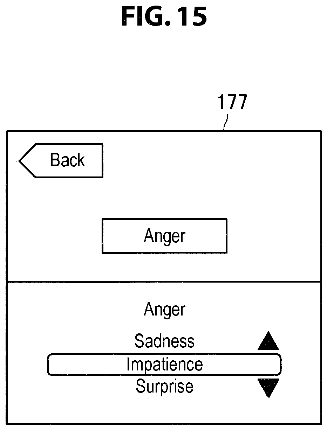

FIG. 15 is an explanatory view showing an example of a user interface 176 that causes the user to set a condition of the kind of emotion in a case where "Kind of emotion" is selected by the user on the user interface 174 that displays the list of conditions. The example shown in FIG. 14 shows the user interface 176 in which the following is set as a condition: a plurality of pieces of content should not be selected in a case where the emotion of the user is "Anger".

By outputting the user interfaces shown in FIGS. 13 to 15, the information processing device 100 can cause the user to set a condition of determining whether to select a plurality of pieces of content to the content selection unit 130 in advance.

As described above, the content selection unit 130 can select a piece of content matching a status of the user from the pieces of content existing in the external service 10. In a case where the content selection unit 130 selects a piece of content matching the status of the user from the pieces of content existing in the external service 10, the content selection unit 130 may set a search condition by combining information transmitted from the user status analysis unit 120 with information stored on the external service 10, instead of setting a search condition only on the basis of the information transmitted from the user status analysis unit 120.

For example, the external service 10 may hold a history indicating which content is used by each user. Information held by the external service 10 can include, for example, an age, a sex, a residential area, and a habit of the user.

As described above, the content starting unit 150 reads out content selected by the content selection unit 130 from the storage unit 140 and starts the content. Therefore, the content starting unit 150 reads out content selected by the content selection unit 130 from the storage unit 140 and start the content, regardless of an intention of the user.

Conventionally, the user shows a behavioral intention of the user to a device by explicitly selecting and starting content. The user needs to clarify, in advance, by which content his/her behavioral intention can be realized. Therefore, in a case of necessary content, the user makes advance preparation such as downloading, installing, or service registration. Further, in a case where content is charged, the user performs payment processing of a fee needed to use the content in advance.

However, in the present embodiment, the content starting unit 150 reads out content selected by the content selection unit 130 from the storage unit 140 and starts the content, regardless of an intention of the user. However, payment processing of a fee needed to use the content cannot be performed without permission, i.e., without receiving confirmation of the payment processing from the user.

In view of this, hereinafter, there will be described an example of payment processing of a fee performed by the content starting unit 150 in a case where content selected by the content selection unit 130 on the basis of a status of the user is charged content. In a case where the content starting unit 150 pays a fee of the content selected by the content selection unit 130 on the basis of the status of the user, the content starting unit 150 changes, for example, a condition in which payment of the fee of the content is generated in accordance with a usage history of the content. The usage history of the content includes a usage amount of the content and a degree of achievement to a target value set in the content. The usage amount of the content includes a usage distance of the content, a usage time of the content, and the like.

For example, the content execution unit 160 for executing content started by the content starting unit 150 acquires a status of the user from the user status analysis unit 120. Then, in a case where the user stops using the content executed by the content execution unit 160, the content starting unit 150 compares the status of the user transmitted from the user status analysis unit 120 with a target value set in the content, and, in a case where the status of the user achieves the target value, the content starting unit 150 performs payment processing of a usage fee of the content. In addition, the content starting unit 150 changes the target value between a case where the started content is content selected by the content selection unit 130 on the basis of a status of the user and a case where the started content is content explicitly selected by the user.

For example, in a case where the user starts running and the content selection unit 130 selects a charged running application, payment processing of a fee of the running application is not performed at a time when the content starting unit 150 starts the running application. In this running application, a usage distance of the content is specified as a condition in which payment of the fee of the content is generated, and, for example, the fee of the running application is set to be paid at a time when the user runs 5 km or more.

Then, in a case where, for example, the user runs 10 km and stops using the running application, the content starting unit 150 executes the payment processing of the fee of the running application. On the contrary, in a case where, for example, the user runs only 1 km and stops using the running application, the content starting unit 150 does not execute the payment processing of the fee of the running application.

Further, for example, in a case where the user enters a bookstore and the content selection unit 130 selects a charged book review application, payment processing of a fee of the book review application is not performed at a time when the content starting unit 150 starts the book review application. In this book review application, a usage amount of the content is specified as a condition in which payment of the fee of the content is generated, and, for example, the fee of the book review application is set to be paid at a time when the user displays book reviews of three or more books.

Then, in a case where, for example, the user displays book reviews of five books and stops using the book review application, the content starting unit 150 executes the payment processing of the fee of the book review application. On the contrary, in a case where, for example, the user displays only a book review of a single book, then leaves the bookstore, and stops using the book review application, the content starting unit 150 does not execute the payment processing of the fee of the book review application.

Further, for example, in a case where the user searches a destination and the content selection unit 130 selects a charged map application, payment processing of a fee of the map application is not performed at a time when the content starting unit 150 starts the map application. In this map application, a degree of achievement to a target value set in the content is specified as a condition in which payment of the fee of the content is generated, and, for example, the fee of the map application is set to be paid at a time when the user arrives at the destination.

Then, in a case where the user arrives at the destination while seeing a map displayed on the map application and stops using the map application, the content starting unit 150 executes the payment processing of the fee of the map application. On the contrary, in a case where the user stops using the map application before the user arrives at the destination, the content starting unit 150 does not execute the payment processing of the fee of the map application.

As described above, the content starting unit 150 can execute payment processing of a fee of content depending on whether or not a status of the user achieves a usage amount of the content set in the content in advance or a degree of achievement to a target value set in the content. In addition, the content starting unit 150 changes the target between a case where the started content is content selected by the content selection unit 130 on the basis of a status of the user and a case where the started content is content explicitly selected by the user.

As the target set in the content, not only the above targets but also various targets can be set. For example, in a case where the number of times of recognition is set to be a target, the number of times of audio recognition processing or content of an utterance can be set as a target in a case of audio recognition, and the number of times of performing prescribed behavior (the number of swings of golf, the number of punches, the number of pull-ups, or the like) can be set as a target in a case of behavior recognition. Further, in a case where time is set to be a target, a usage time of the content can be set as a target. Further, in a case where a position is set to be a target, a range (whether or not the position falls within a specified range) can be set as a target.

In a case where the content starting unit 150 starts charged content, the content starting unit 150 may notify a user through the output device 170 that there is a possibility that payment of a fee is generated in a case where a status of the user approaches a target of payment of the fee of the content.

For example, in a case where a usage time of content approaches a time serving as a target of payment of a fee, the content starting unit 150 may output, for example, "Fee will be charged in O minutes." by voice through the output device 170. Further, in a case where a status of the user approaches a target of payment of a fee of the content, the content starting unit 150 may perform output via, for example, vibration through the output device 170. As the status of the user approaches the target of payment of the fee of the content, the content starting unit 150 may increase an amount of vibration or reduce an interval of vibration.

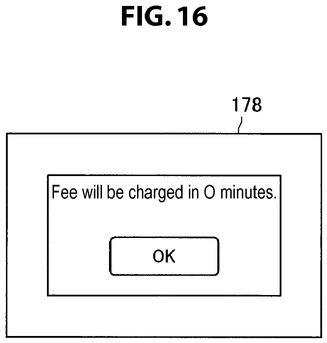

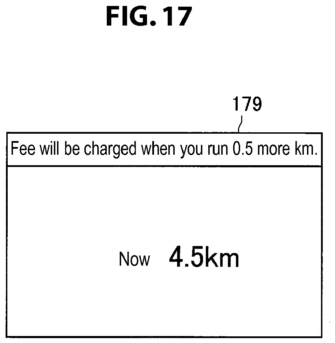

Further, in a case where a status of the user approaches a target of payment of a fee of content, the content starting unit 150 may perform output via, for example, a dialog or display in a screen through the output device 170. FIG. 16 is an explanatory view showing an example of a user interface 178 that presents approaching to a target of payment of a fee of content to the user via a dialog. FIG. 17 is an explanatory view showing an example of a user interface 179 that presents approaching to a target of payment of a fee of content to the user via display in a screen.

In addition, presentation of a possibility that payment of a fee is generated to the user can be performed by stimulation (electrical stimulation or the like), animation (repeatedly blinking in a screen, sliding a notification into a screen), blinking of light, or a plurality of combinations thereof (combination of audio with vibration, combination of audio with stimulation, combination of display in screen with vibration, and the like).

Note that at what degree of difference from a target the user is notified may be set for each piece of content, or an initial value may be set in advance in the information processing device 100.

In addition, the content starting unit 150 may set a time when the user removes the information processing device 100, a time when a status opposite to a condition in which content is automatically started occurs, or the like as a timing of executing payment processing of a fee of content.

For example, in a case where certain charged content is started when a pulse of the user is equal to or larger than a predetermined value, the content starting unit 150 may execute payment processing of a fee of the content when the pulse of the user is reduced. Further, for example, in a case where certain charged content is started when the user starts crying, the content starting unit 150 may execute payment processing of a fee of the content when the user stops crying.

There is content in which, although execution can be performed for free, a fee needs to be paid in order to continuously use the content or use a function that the content has as an expanded function. The content starting unit 150 may set a time when the content is attempted to be continuously used or a time when a range of a function of the content used by the user is attempted to be expanded as described above as a timing of executing payment processing of the fee of the content.

For example, it is assumed that a certain running application can be used for free to check only a running distance, a running time, or the like, but it is necessary to pay a fee to check past statics. The content starting unit 150 may execute payment processing of the fee of the running application at a time when the user stops running and attempts to check past statics in the running application.

The content starting unit 150 reads out content selected by the content selection unit 130 from the storage unit 140 and starts the content as described above. In a case where the content starting unit 150 reads out content selected by the content selection unit 130 from the storage unit 140 and starts the content, the content selection unit 130 stores, on the storage unit 140, a fact that the selected content has been started by the content starting unit 150.

The fact that the content selected by the content selection unit 130 has been started by the content starting unit 150 is stored on the storage unit 140, and therefore, in a case where the same content is started by the user's explicit selection operation thereafter and payment of a fee of the content is necessary, the content starting unit 150 can present necessity of payment of the fee of the content to the user.

For example, it is assumed that, in a case where operation of a train on which the user having the information processing device 100 rides is suspended due to an injury accident, the content selection unit 130 automatically selects a charged route navigation application in accordance with the suspension of the operation and the content starting unit 150 automatically starts the route navigation application. At this time, payment of a fee of this route navigation application is not performed because of an emergency situation in which the operation of the train has been suspended due to the injury accident. However, in a case where the user explicitly starts the same route navigation application thereafter, the content starting unit 150 presents necessity of payment of the fee to use the route navigation application. The user can know that it is necessary to pay the fee to use the route navigation application via presentation by the content starting unit 150.

Further, for example, it is assumed that, in a case where an event is held at a certain place and the user having the information processing device 100 moves to a hall of the event, the content selection unit 130 selects a charged event application and the content starting unit 150 automatically starts the event application. At this time, payment of a fee of this event application is not performed. However, in a case where the user explicitly starts the same event application thereafter, the content starting unit 150 presents necessity of payment of the fee to use the event application. The user can know that it is necessary to pay the fee to use the event application.

Further, for example, it is assumed that, in a case where the user having the information processing device 100 starts running, the content selection unit 130 selects a charged running application and the content starting unit 150 automatically starts the running application. At this time, payment of a fee of this running application is not performed. However, in a case where the user explicitly starts the same running application thereafter, the content starting unit 150 presents necessity of payment of the fee to use the running application. The user can know that it is necessary to pay the fee to use the running application.

In addition, an opportunity to cause the content starting unit 150 to automatically start content is a case where the user performs specified behavior, a case based on a habit of the user, a case based on an emotion of the user, a case based on time, a case based on a position of the user, or the like.

Examples of the case where the user performs specified behavior can be a case where an utterance of the user is detected by audio recognition processing and a case where behavior of the user, such as walking, running, sitting, eating, or playing sport, is detected by behavior recognition processing.

Examples of the case based on a habit of the user can be a case where the user gets up, falls asleep, or is eating, a case where it is time to go to work or go to school, a case where the user is in a path to go to work or go to school, and a case where the user stays with his/her boyfriend/girlfriend or family.

Examples of the case based on an emotion of the user can be, for example, cases where the user is in a state of tension, is sad, and is angry.

Examples of the case based on time can be a plan of the user, date and time at which an event is held, and the like.

Examples of the case based on a position can be cases where the user is at a predetermined position, is within a predetermined range from a predetermined position, and is in a predetermined country or city.

As a matter of course, examples of the opportunity to cause the content starting unit 150 to automatically start content are not limited to the cases described above.

In a case where content acquired from the external service 10 is started by user's explicit selection operation thereafter and payment of a fee of the content is necessary, the content starting unit 150 may present necessity of payment of the fee of the content to the user. However, regardless of whether the content is started by the user's explicit selection operation or is automatically started on the basis of a status of the user, the content starting unit 150 may present necessity of payment of the fee of the content to the user when the content is started a predetermined plurality of times or more.

For example, it is assumed that, in a case where the user having the information processing device 100 starts running, the content selection unit 130 selects a charged running application and the content starting unit 150 automatically starts the running application. At this time, payment of a fee of this running application is not performed. However, when the user explicitly starts the same running application or the same running application is selected in accordance with a status of the user thereafter, the content starting unit 150 presents necessity of payment of the fee to use the running application.

As described above, the content starting unit 150 starts content selected by the content selection unit 130 on the basis of a status of the user. However, it is also considered that content selected by the content selection unit 130 on the basis of a status of the user and started by the content starting unit 150 is content that is not intended by the user.

In a case where content started by the content starting unit 150 is content that is not intended by the user, the user terminates the content, and, when the content is terminated, the content execution unit 160 determines whether starting of the content is not intended by the user or the content is explicitly terminated, and the content starting unit 150 associates the started content, the status of the user at the time of start (context), and unintended starting with one another and stores the associated information on the storage unit 140. Then, the content selection unit 130 acquires each piece of the above information from the storage unit 140 and uses each piece of the above information as a search condition at the time of selection, and therefore it is possible to restrain content that is not intended by the user from being selected.

For example, the content selection unit 130 may determine whether or not content is content expected by the user on the basis of a period of time from when the content is started to when the content is terminated by the user. For example, it is assumed that, in a case where the user starts running, the content selection unit 130 selects a certain running application and the content starting unit 150 starts the running application. However, the running application is terminated by the user within a predetermined period of time because the running application is not an application expected by the user. In a case where the user starts running next time, the content selection unit 130 excludes this running application from options. As described above, by determining whether or not content is content expected by the user on the basis of a period of time from when the content is started to when the content is terminated by the user, the content selection unit 130 can restrain content that is not intended by the user from being selected.

For example, the content selection unit 130 may determine whether or not content is content expected by the user on the basis of determination of the user with respect to the started content. For example, it is assumed that, in a case where the user starts running, the content selection unit 130 selects a certain running application and the content starting unit 150 starts the running application. Then, in a case where the user terminates running and terminates the running application, the content starting unit 150 causes the user to input an evaluation of the running application. In a case where the running application is an application expected by the user, the content selection unit 130 includes this running application as an option in a case where the user starts running next time. On the contrary, in a case where the running application is not an application expected by the user, the content selection unit 130 excludes this running application from options in a case where the user starts running next time. As described above, by determining whether or not content is content expected by the user on the basis of an evaluation input by the user, the content selection unit 130 can restrain content that is not intended by the user from being selected.

For example, the content selection unit 130 may determine whether or not content is content expected by the user on the basis of a usage amount of the content in a period of time from when the content is started to when the content is terminated by the user. For example, it is assumed that, in a case where the user starts running, the content selection unit 130 selects a certain running application and the content starting unit 150 starts the running application. However, the user does not run for a long distance and terminates running. The content selection unit 130 determines that the application is not an application expected by the user, and, in a case where the user starts running next time, the content selection unit 130 excludes this running application from options. As described above, by determining whether or not content is content expected by the user on the basis of a usage amount of the content in a period of time from when the content is started to when the content is terminated by the user, the content selection unit 130 can restrain content that is not intended by the user from being selected.

In addition, a factor of determining whether or not content is content expected by the user can be, for example, an emotion of the user or behavior of the user after the content is started. Examples of the emotion of the user can be, for example, negative emotions such as anger and anxiety. Examples of the behavior of the user can be, for example, negative actions such as actions in which the user raises his/her voice, clicks his/her tongue, utters a negative word such as "No." or "That is not desired content.", shakes his/her head, waves his/her hand, and crosses his/her fingers or hands.

As described above, the content selection unit 130 selects a plurality of pieces of content in some cases. In addition, the content starting unit 150 starts the plurality of pieces of content selected by the content selection unit 130 in some cases. In this case, the content selection unit 130 may generate information on starting order of the pieces of content, and the content starting unit 150 may read out the pieces of content from the storage unit 140 on the basis of the starting order of the pieces of content generated by the content selection unit 130 and start the pieces of content.

Furthermore, in a case where the content starting unit 150 starts content that is not intended by the user, the content starting unit 150 may delete the content from the storage unit 140.

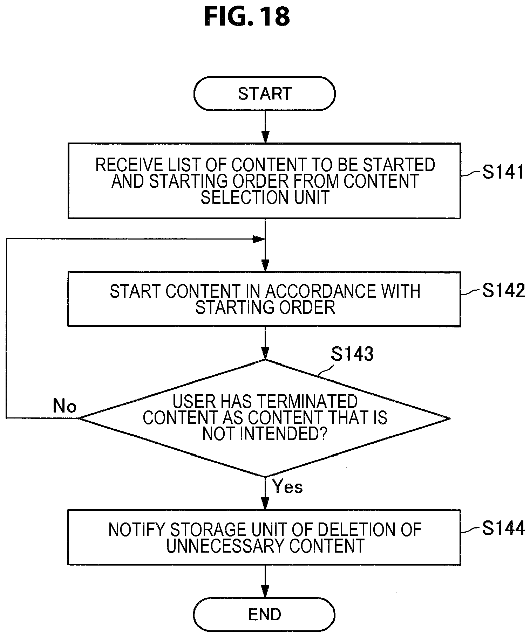

FIG. 18 is a flowchart showing an operation example of the content starting unit 150 included in the information processing device 100 according to the embodiment of the present disclosure. FIG. 18 shows the operation example of the content starting unit 150 performed in a case where pieces of content are read out from the storage unit 140 on the basis of starting order of the pieces of content generated by the content selection unit 130 and the plurality of pieces of content are started. Hereinafter, the operation example of the content starting unit 150 will be described with reference to FIG. 18.

In a case where the content starting unit 150 starts a plurality of pieces of content, the content starting unit 150 receives a list of the pieces of content to be started and starting order of the pieces of content from the content selection unit 130 (Step S141).

When the content starting unit 150 receives the list of the pieces of content to be started and the starting order of the pieces of content from the content selection unit 130 in Step S141, the content starting unit 150 reads out the pieces of content from the storage unit 140 on the basis of the list of the pieces of content to be started and the starting order of the pieces of content and starts a first piece of content (Step S142).

Thereafter, as described above, the content starting unit 150 determines whether or not the user has terminated the content because the content is content that is not intended (Step S143). As a result of the determination in Step S143, in a case where the user terminates the content because the started content is content that is not intended by the user (Step S143, Yes), the content starting unit 150 notifies the storage unit 140 that the content needs to be deleted (Step S144). On the contrary, as a result of the determination in Step S143, in a case where the user does not terminate the content because the started content is not content that is not intended by the user (Step S143, No), the content starting unit 150 returns to the processing for starting content in Step S142.

By executing the processing shown in FIG. 16, the content starting unit 150 can read out pieces of content from the storage unit 140 on the basis of starting order of the pieces of content generated by the content selection unit 130 and start the pieces of content. Further, in a case where the content starting unit 150 executes the processing shown in FIG. 16 and starts content that is not intended by the user, the content starting unit 150 can delete the content from the storage unit 140. In a case where, after the content starting unit 150 automatically deletes content that is not intended by the user, the content becomes a target to be selected again in the content selection unit 130, the content selection unit 130 only needs to acquire the content from the external service 10.

Note that, in the flowchart shown in FIG. 18, in a case where the user terminates content because the started content is content that is not intended by the user, the content starting unit 150 performs processing for notifying the storage unit 140 that the content needs to be deleted. However, the present disclosure is not limited to such an example. The content starting unit 150 may determine whether to automatically delete content that is not intended by the user on the basis of user setting or on the basis of a free space of the storage unit 140. For example, in a case where the free space of the storage unit 140 is reduced to a predetermined value or less or predetermined percentages or less, the content starting unit 150 may automatically delete content that is not intended by the user.

The content starting unit 150 may read out pieces of content from the storage unit 140 on the basis of starting order of the pieces of content generated by the content selection unit 130 and simultaneously start the plurality of pieces of content or may successively start the pieces of content so that the plurality of pieces of content are simultaneously executed by the content execution unit 160.

In a case where the content starting unit 150 successively starts pieces of content so that the plurality of pieces of content are simultaneously executed by the content execution unit 160, the content starting unit 150 may read out pieces of content, the number of which can be simultaneously executed in the information processing device 100, from the storage unit 140 and successively start the pieces of content. The number of pieces of content that can be simultaneously executed in the information processing device 100 can be set on the basis of, for example, execution performance of content in the content execution unit 160.

Also in a case where pieces of content are successively started so that the plurality of pieces of content are simultaneously executed in the content execution unit 160 and when started content is content that is not intended by the user and the user terminates the content, the content starting unit 150 may perform processing for notifying the storage unit 140 that the content needs to be deleted. The content starting unit 150 may determine whether to automatically delete content that is not intended by the user on the basis of user setting or on the basis of the free space of the storage unit 140.

As described above, content automatically started by the content starting unit 150 is not content intended by the user in some cases. However, it is also considered that there is a possibility that the user desires to use the content a little longer afterwards.

In view of this, the information processing device 100 according to the present embodiment may store, on the storage unit 140, a starting history of content automatically started by the content starting unit 150. Further, the information processing device 100 according to the present embodiment may store, on the storage unit 140, not only the starting history of content automatically started by the content starting unit 150, but also a status of the user obtained when the content starting unit 150 automatically starts content. By referring to the starting history of content and the past status of the user, the user can select a piece of content to be started from pieces of content started by the content starting unit 150 in the past.

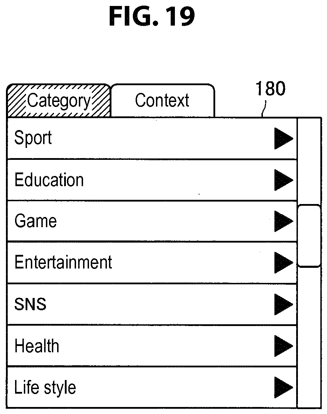

FIGS. 19 to 21 are explanatory views showing examples of a user interface for presenting a starting history of content automatically started by the content starting unit 150 or a status of the user. The user interfaces shown in FIGS. 19 to 21 are displayed on, for example, the output device 170. The user can operate the user interfaces shown in FIGS. 19 to 21 by using the input device 110.

FIG. 19 shows an example of a user interface 180 for presenting, to the user, a list of categories of content automatically started by the content starting unit 150. By operating the user interface 180 displayed as in FIG. 19, the user can select a category of content automatically started by the content starting unit 150.

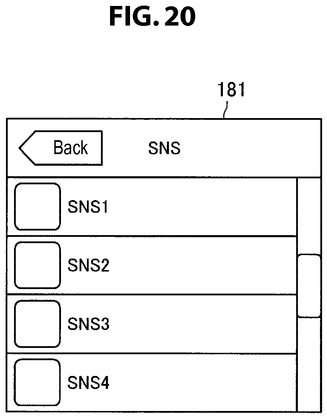

FIG. 20 shows an example of a user interface 181 for presenting, to the user, a list of pieces of content automatically started by the content starting unit 150 and is an example of the user interface 181 presented to the user in a case where the user selects "SNS" on the user interface 180 in FIG. 19. By operating the user interface 181 displayed as in FIG. 20, the user can select content automatically started by the content starting unit 150.

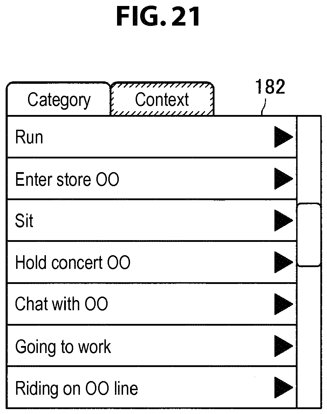

FIG. 21 shows an example of a user interface 182 for presenting, to the user, a list of statuses of the user (context) obtained in a case where the content starting unit 150 automatically starts content. By operating the user interface 182 displayed as in FIG. 21, the user can select a status of the user obtained in a case where the content starting unit 150 automatically starts the content.

By seeing a history output to the output device 170 as in FIGS. 19 to 21, the user can know which content has been automatically started in the past. In addition, by operating the user interfaces output to the output device 170 as in FIGS. 19 to 21, the user can select content that the user desires to use and cause the content starting unit 150 to start the content.

In a case where the content starting unit 150 starts content, the content starting unit 150 may change various conditions of the content between a case where content selected by the content selection unit 130 is automatically started and a case where the content is explicitly started by the user.

For example, the content starting unit 150 may change a usage fee of content between a case where content selected by the content selection unit 130 is automatically started and a case where the content is explicitly started by the user.

In a case where content selected by the content selection unit 130 is automatically started by the content starting unit 150, the content is not content intended by the user in some cases as described above.

Therefore, in a case where content automatically started by the content starting unit 150 is charged content and the content is not content intended by the user, the content starting unit 150 may moderate a condition in which payment of a fee of the content is generated or reduce an amount of the charged fee, as compared to a case where the content is explicitly started by the user. In addition, in a case where, after content is automatically started by the content starting unit 150, the same content is explicitly started by the user, a difference between a usage fee generated in a case where the content is explicitly started by the user and a usage fee generated in a case where the content is automatically started may be charged to the user.

Further, for example, the content starting unit 150 may change a function of content between a case where content selected by the content selection unit 130 is automatically started and a case where the content is explicitly started by the user.

The content starting unit 150 may cause a usage fee generated in a case where content selected by the content selection unit 130 is automatically started to be lower than a usage fee generated in a case where the content is explicitly started by the user. However, at that time, in a case where the content is automatically started, the user may restrict a function of the content, as compared to a case where the content is explicitly started by the user. For example, in a case where the content starting unit 150 starts a running application, the content starting unit 150 may start the content so that all functions can be executed in a case where the content is explicitly started by the user and may start the content so that part of functions cannot be executed in a case where the content is automatically started.

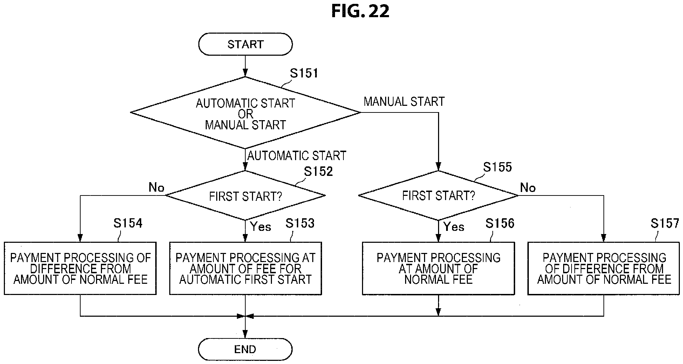

FIG. 22 is a flowchart showing an operation example of the content starting unit 150 included in the information processing device 100 according to the embodiment of the present disclosure. FIG. 22 shows the operation example of the content starting unit 150 performed in a case where payment processing of a usage fee of content is changed between a case where the content is automatically started and a case where the content is explicitly started by the user. Hereinafter, the operation example of the content starting unit 150 will be described with reference to FIG. 22.

The content starting unit 150 first determines whether or not content is automatically started or is explicitly started by the user (is manually started) (Step S151). As a result of the determination in Step S151, in a case where the content is automatically started, then the content starting unit 150 determines whether or not the content is started for the first time (first start) (Step S152). Whether or not the content is started for the first time may be determined by, for example, referring to a starting history stored on the storage unit 140.

In a case where the content is started for the first time (Step S152, Yes), the content starting unit 150 performs payment processing of a usage fee of the content at an amount of fee for automatic first start (Step S153). On the contrary, in a case where the content is not started for the first time (Step S152, No), the content starting unit 150 performs payment processing of a usage fee of a difference between an amount of normal fee and the amount of fee for automatic first start (Step S154).

As a result of the determination in Step S151, in a case where the content is manually started, then the content starting unit 150 determines whether or not the content is started for the first time (first start) (Step S155). Whether or not the content is started for the first time may be determined by, for example, referring to the starting history stored on the storage unit 140.

In a case where the content is started for the first time (Step S155, Yes), the content starting unit 150 performs payment processing of the usage fee of the content at the amount of normal fee (Step S156). On the contrary, in a case where the content is not started for the first time (Step S155, No), the content starting unit 150 performs the payment processing of the usage fee of the difference between the amount of normal fee and the amount of fee for automatic first start (in a case where only the amount of fee for automatic first start has been paid) (Step S157).

Although the payment processing of a usage fee of content shown in FIG. 22 may be automatically executed by the content starting unit 150, the content starting unit 150 may require the user to execute the payment processing, and the payment processing may be executed when the user gives permission.

By executing the series of operation shown in FIG. 22, the content starting unit 150 can change payment processing of a usage fee of content between a case where the content is automatically started and a case where the content is explicitly started by the user.

In a case where the content starting unit 150 executes payment processing of a usage fee of content, at least one of the following (1) to (3) occurs.
(1) The user acquires usage authorization of the content.
(2) A usable range of a function that the content originally has is increased.
(3) Restriction of a usage amount of the content that the user can use is removed.

As an example of the above (2), in, for example, a running application, it is possible to check only a current status before a usage fee is paid, but it is also possible to check information on past statics after the usage fee is paid. Further, as an example of the above (3), in, for example, a running application, it is possible to use the running application for only five minutes before a usage fee is paid, but this restriction of a usage time is removed after the usage fee is paid.

Content itself and information on the content are stored on the storage unit 140. The information on the content is a starting history of the content, a validity period of the content, a position at which the content can be started, and the like, and those pieces of information may be recorded in a case where the content is stored on the storage unit 140 or may be recorded in a case where the content is started by the content starting unit 150.

The content starting unit 150 may automatically delete a piece of content stored on the storage unit 140 on the basis of information on the piece of content stored on the storage unit 140. Further, in a case where operated content satisfies a predetermined condition for deletion, the content starting unit 150 may automatically delete the content.

For example, in a case where there is content that has not been started for a predetermined period of time or longer, the content starting unit 150 may delete the content from the storage unit 140.

Further, for example, in a case of an application regarding an event held at specified date and time, the content starting unit 150 may delete the application from the storage unit 140 in a case where the event is terminated.

Further, for example, in a case of an application started when the user enters a bookstore, the content starting unit 150 may delete the application from the storage unit 140 when the user leaves the bookstore. Further, for example, in a case of an application that can be used in a specified city, country, or range, the content starting unit 150 may delete the application from the storage unit 140 in a case where the user moves out of the specified city, country, or range.

Further, for example, in a case of an application regarding a certain store, the content starting unit 150 may delete an application of another competitive store from the storage unit 140 in a case where it is grasped that the user uses the store on a daily basis on the basis of a status of the user.

At a time when the free space of the storage unit 140 is reduced to a predetermined amount or predetermined percentages or less, the content starting unit 150 may automatically delete a piece of content stored on the storage unit 140 on the basis of information on the piece of content stored on the storage unit 140.

Hereinabove, an example where content is selected by the information processing device 100 that the user possesses has been described. However, the present disclosure is not limited to such an example. The processing for analyzing a status of the user and the processing therebefore may be performed by the information processing device 100, and the processing for selecting content may be executed by a server device for providing the external service 10. Further, the information processing device 100 may transmit data used for analyzing a status of the user to the external service 10, and the server device for providing the external service 10 may execute analysis of the status of the user and selection of content.

### (Use case examples)

Hereinabove, the operation example of the information processing device 100 according to the embodiment of the present disclosure have been described. Next, there will be cited examples of a use case that may occur due to using the information processing device 100 according to the embodiment of the present disclosure.

### (Example 1)

When a user gets up in the morning and leaves home to go to work, the information processing device 100 automatically starts a news application. The user can check the latest news in the news application while going to work.

### (Example 2)

Although the user arrives at a nearest station, it seems that a train on which the user always rides is not operated due to an injury accident. Then, the information processing device 100 automatically starts a route navigation application. The user can search a detour route to go to work by seeing the route navigation application.

### (Example 3)

The user attends a meeting at a place where the user visits. The information processing device 100 automatically starts an email cation at a timing at which the meeting is terminated. The email application has received an email from his girlfriend, and therefore the user does not miss an important message from the girlfriend.

### (Example 4)

In order to return to a company from the place where the user visits, the user manually starts the route navigation application automatically started by the information processing device 100 in the morning. Then, the information processing device 100 performs display showing that a usage fee of the route navigation application needs to be paid because the route navigation application is manually started. The user pays the usage fee of the route navigation application and uses the route navigation application.

### (Example 5)

The user stops by a rental video store on the way home from the company. As the user enters the rental video store, the information processing device 100 automatically starts a charged movie review application and displays a review of a DVD picked up by the user. However, the user receives a call from the girlfriend, and therefore the user immediately terminates the movie review application and leaves the rental video store. Therefore, payment of a fee of the movie review application started by the information processing device 100 is not charged.

### (Example 6)

The user decides to get up early and start running in the morning on holidays for dieting. When the user starts running, the information processing device 100 can automatically start a charged running application and present a pace or a running distance to the user. When the user runs about 3 km, the information processing device 100 notifies the user of a possibility of payment of a fee of the running application. The user likes this running application and therefore continuously runs. Then, when the user runs about 5 km, the user terminates the running application and pays a usage fee of the running application.

### (Example 7)

The user has arranged to meet the girlfriend in the daytime on a holiday. When a lunchtime comes, the information processing device 100 starts a restaurant guide application. The user can search a popular restaurant near a meeting place by using the staurant guide application.

### (Example 8)

The user has lunch with the girlfriend and moved to a place near a movie theater in order to see a movie. Then, the information processing device 100 automatically starts a movie review application. The user sees the movie review application and decides to see a movie favored by other users with the girlfriend.

### (Example 9)

After the user sees a movie with the girlfriend, the user enters a café and talks about travelling to Guam during summer vacation. Then, the information processing device 100 analyzes the content of conversation of the user and automatically starts a travel guide application. The user can have a fun conversation with the girlfriend while seeing travel information in Guam in the travel guide application.

### (Example 10)

When, after a date with the girlfriend, the user returns to home and watches television, a Guam tourism CM is broadcasted. Then, the information processing device 100 automatically starts a travel guide application in response to broadcasting of the Guam tourism CM on television. However, the application is different from the application used by the user in the daytime at the café. In view of this, the user displays a usage history by operating the information processing device 100, selects the travel guide application used in the daytime, and starts the travel guide application.

As described above, the information processing device 100 according to the embodiment of the present disclosure can select various pieces of content in various scenes and automatically execute the pieces of content. As a matter of course, it is needless to say that use cases that may occur due to using the information processing device 100 according to the embodiment of the present disclosure are not limited to the above ten examples.

### <2. Hardware configuration example>

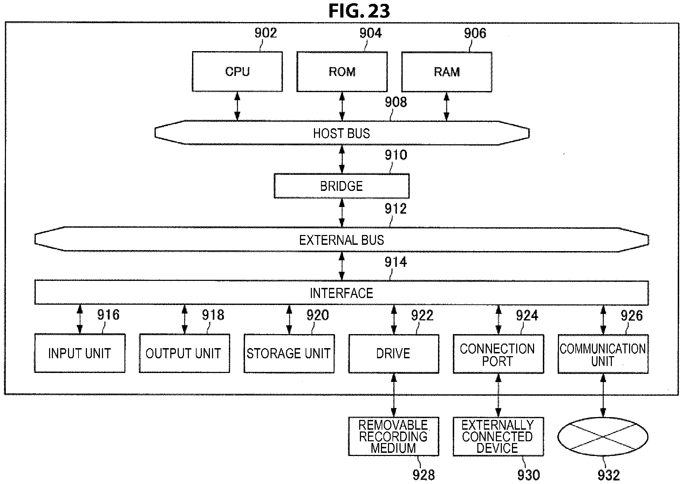

Next, a hardware configuration of the information processing apparatus 100 according to an embodiment of the present disclosure will be described with reference to FIG. 23. FIG. 23 is a block diagram illustrating a hardware configuration example of the information processing apparatus 100 according to the embodiment of the present disclosure. Each of the algorithms described above can be performed by using, for example, the hardware configuration of the information processing apparatus shown in FIG. 23. That is, the processing of each of the algorithms can be realized by controlling the hardware shown in FIG. 23 using a computer program.

Note that the mode of this hardware shown in FIG. 23 is arbitrary, and may be, for example, a personal computer, a mobile information terminal such as a mobile phone, a PHS or a PDA, a game machine, a contact or non-contact IC chip, a contact or non-contact IC card, a loud speaker, a television set, a monitor, a wearable device, or various types of information appliances. Moreover, the PHS is an abbreviation for Personal Handy-phone System. Also, the PDA is an abbreviation for Personal Digital Assistant.

As shown in FIG. 23, this hardware mainly includes a CPU 902, a ROM 904, a RAM 906, a host bus 908, and a bridge 910. Furthermore, this hardware includes an external bus 912, an interface 914, an input unit 916, an output unit 918, a storage unit 920, a drive 922, a connection port 924, and a communication unit 926. Moreover, the CPU is an abbreviation for Central Processing Unit. Also, the ROM is an abbreviation for Read Only Memory. Furthermore, the RAM is an abbreviation for Random Access Memory.

The CPU 902 functions as an arithmetic processing unit or a control unit, and controls entire operation or a part of the operation of each structural element on the basis of various programs recorded on the ROM 904, the RAM 906, the storage unit 920, or a removable recording medium 928. The ROM 904 is a device for storing a program to be read by the CPU 902 or data or the like used in an arithmetic operation. The RAM 906 temporarily or perpetually stores, for example, a program to be read by the CPU 902 or various parameters or the like appropriately changed in execution of the program.

These structural elements are connected to each other by, for example, the host bus 908 capable of performing high-speed data transmission. For its part, the host bus 908 is connected through the bridge 910 to the external bus 912 whose data transmission speed is relatively low, for example. Furthermore, the input unit 916 is, for example, a mouse, a keyboard, a touch panel, a button, a switch, or a lever. Also, the input unit 916 may be a remote controller that can transmit a control signal by using an infrared ray or other radio waves.

The output unit 918 is, for example, a display device such as a CRT, an LCD, a PDP or an ELD, an audio output device such as a speaker or headphones, a printer, a mobile phone, or a facsimile, that can visually or auditorily notify a user of acquired information. The CRT is an abbreviation for Cathode Ray Tube. In addition, the LCD is an abbreviation for Liquid Crystal Display. The PDP is an abbreviation for Plasma Display Panel. Also, the ELD is an abbreviation for Electro-Luminescence Display.

The storage unit 920 is a device for storing various data. The storage unit 920 is, for example, a magnetic storage device such as a hard disk drive (HDD), a semiconductor storage device, an optical storage device, or a magneto-optical storage device. The HDD is an abbreviation for Hard Disk Drive.

The drive 922 is a device that reads information recorded on the removable recording medium 928, for example, a magnetic disk, an optical disc, a magneto-optical disc, or a semiconductor memory, or writes information in the removable recording medium 928. The removable recording medium 928 is, for example, a DVD medium, a Blu-ray medium, an HD-DVD medium, various types of semiconductor storage media, or the like. Of course, the removable recording medium 928 may be, for example, an electronic device or an IC card on which a non-contact IC chip is mounted. The IC is an abbreviation for Integrated Circuit.

The connection port 924 is, for example, a USB port, an IEEE1394 port, a SCSI, an RS-232C port, or a port for connecting an externally connected device 930 such as an optical audio terminal. The externally connected device 930 is, for example, a printer, a mobile music player, a digital camera, a digital video camera, or an IC recorder. The USB is an abbreviation for Universal Serial Bus. Also, the SCSI is an abbreviation for Small Computer System Interface.

The communication unit 926 is a communication device to be connected to a network 932, and is, for example, a communication card for a wired or wireless LAN, Bluetooth (registered trademark), or WUSB, an optical communication router, an ADSL router, or a device for contact or non-contact communication. In addition, the network 932 connected to the communication unit 926 is configured from a wire-connected or wirelessly connected network, and is the Internet, a home-use LAN, infrared communication, visible light communication, broadcasting, or satellite communication, for example. The LAN is an abbreviation for Local Area Network. Also, the WUSB is an abbreviation for Wireless USB. Furthermore, the ADSL is an abbreviation for Asymmetric Digital Subscriber Line.

### <3. Conclusion>

As described above, according to an embodiment of the present disclosure, there is provided the information processing device 100 capable of analyzing a status of a user on the basis of input data and selecting content matching the status of the user on the basis of the status of the user. Further, according to an embodiment of the present disclosure, there is provided the information processing device 100 capable of changing operation to content matching a status of a user in accordance with presence/absence of the content in a user device.

In a case where the content matching the status of the user is stored, the information processing device 100 according to the embodiment of the present disclosure reads out the content and starts the content, and, in a case where the content matching the status of the user is not stored, the information processing device 100 downloads the content from the external service 10 and starts the content. That is, the information processing device 100 according to the embodiment of the present disclosure can change operation to the content matching the status of the user in accordance with presence/absence of the content in the user device.

It may not be necessary to chronologically execute respective steps in the processing, which is executed by each device of this specification, in the order described in the sequence diagrams or the flow charts. For example, the respective steps in the processing which is executed by each device may be processed in the order different from the order described in the flow charts, and may also be processed in parallel.

Furthermore, it becomes possible to generate a computer program which makes a hardware device, such as a CPU, a ROM, and a RAM incorporated in each device demonstrate the functions equivalent to the configurations of the above described devices. In addition, it becomes also possible to provide a storage medium which stores the computer program. In addition, respective functional blocks shown in the functional block diagrams may be constituted from hardware devices or hardware circuits so that a series of processes may be implemented by the hardware devices or hardware circuits.

In addition, some or all of the functional blocks shown in the functional block diagrams used in the above description may be implemented by a server device that is connected via a network, for example, the Internet. In addition, configurations of the functional blocks shown in the functional block diagrams used in the above description may be implemented in a single device or may be implemented in a system in which a plurality of devices cooperate with one another. The system in which a plurality of devices cooperate with one another may include, for example, a combination of a plurality of server devices and a combination of a server device and a terminal device.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

Further, the effects described in this specification are merely illustrative or exemplified effects, and are not limitative. That is, with or in the place of the above effects, the technology according to the present disclosure may achieve other effects that are clear to those skilled in the art from the description of this specification.

Additionally, the present technology may also be configured as below.
(1) An information processing device including
   a control unit configured to, on the basis of information of content specified on the basis of non-operation information of a user and information on content stored on a user device used by the user, change processing content of the content specified on the basis of information on a status of the user.
(2) The information processing device according to (1),
   in which the non-operation information of the user includes information on a status of the user.
(3) The information processing device according to (2),
   in which the content is application software, and the control unit performs different kinds of processing on the content between a case where the content is specified on the basis of the information on the status of the user and a case where the content is specified on the basis of the user's explicit operation.
(4) The information processing device according to (3),
   in which the control unit changes a function of the content to be executed depending on whether or not the content is specified on the basis of the information on the status of the user.
(5) The information processing device according to (3),
   in which the control unit changes a usable time of the content to be executed depending on whether or not the content is specified on the basis of the information on the status of the user.
(6) The information processing device according to (3),
   in which the control unit changes a condition for obtaining usage authorization of the content to be executed depending on whether or not the content is specified on the basis of the information on the status of the user.
(7) The information processing device according to (6),
   in which the condition is a condition in which a fee charged to obtain the usage authorization of the content is paid, and a change in the condition is a change in an amount of the fee.
(8) The information processing device according to any one of (1) to (7),
   in which the control unit determines the content specified on the basis of the non-operation information of the user in accordance with a characteristic of the user device.
(9) The information processing device according to any one of (1) to (7),
   in which the control unit changes display of the content specified on the basis of the non-operation information of the user in accordance with a characteristic of the user device.
(10) The information processing device according to any one of (1) to (9),
   in which, in a case where the user device includes a plurality of user devices, the control unit changes content to be executed for each of the user devices.
(11) The information processing device according to any one of (1) to (10),
   in which the control unit changes a condition for obtaining usage authorization of the content to be executed in accordance with a usage history of the content.
(12) The information processing device according to (11),
   in which the control unit changes the condition for obtaining the usage authorization of the content to be executed in accordance with a usage amount of the content.
(13) The information processing device according to (12),
   in which the control unit changes the condition for obtaining the usage authorization of the content to be executed in accordance with a usage time of the content.
(14) The information processing device according to (12),
   in which the control unit changes the condition for obtaining the usage authorization of the content to be executed in accordance with the number of times of usage of the content.
(15) The information processing device according to (11),
   in which the control unit changes the condition for obtaining the usage authorization of the content to be executed in accordance with a degree of achievement of a use purpose of the content.
(16) The information processing device according to any one of (11) to (15),
   in which, before processing for obtaining the usage authorization of the content to be executed is executed, the control unit notifies the user of execution of the processing.
(17) The information processing device according to any one of (1) to (16),
   in which, in a case where content written in the information on content exists in the user device, the control unit causes the content to be read out, and, in a case where content written in the information on content does not exist in the user device, the control unit causes the content to be acquired from a device different from the user device.
(18) The information processing device according to (17),
   in which, in a case where the control unit causes the content to be acquired from the device different from the user device because the content does not exist in the user device, when the content is read out a predetermined plurality of times or more, the control unit causes processing for obtaining usage authorization of the content to be executed.
(19) The information processing device according to any one of (1) to (18),
   in which, in a case where the operated content satisfies a predetermined condition for automatically deleting the content, the control unit causes the content to be deleted on the basis of the condition.
(20) The information processing device according to any one of (1) to (19),
   in which, on the basis of comparison information obtained by comparing the information of the content specified on the basis of the non-operation information of the user with the information on content stored on the user device used by the user, the control unit changes the processing content of the content specified on the basis of the non-operation information of the user.
(21) An information processing method including
   on the basis of information of content specified on the basis of non-operation information of a user and information on content stored on a user device used by the user, changing processing content of the content specified on the basis of information on a status of the user.
(22) A computer program for causing a computer to execute
   on the basis of information of content specified on the basis of non-operation information of a user and information on content stored on a user device used by the user, changing processing content of the content specified on the basis of information on a status of the user.

### Reference Signs List

- 10: external service
- 100: information processing device
- 110: input device
- 120: user status analysis unit
- 130: content selection unit
- 140: storage unit
- 150: content starting unit
- 160: content execution unit
- 170: output device

## Claims

1. An information processing device comprising
a control unit configured to, on the basis of information of content specified on the basis of non-operation information of a user and information on content stored on a user device used by the user, change processing content of the content specified on the basis of the non-operation information of the user.

2. The information processing device according to claim 1,
wherein the non-operation information of the user includes information on a status of the user.

3. The information processing device according to claim 2,
wherein the content is application software, and the control unit performs different kinds of processing on the content between a case where the content is specified on the basis of the information on the status of the user and a case where the content is specified on the basis of the user's explicit operation.

4. The information processing device according to claim 3,
wherein the control unit changes a function of the content to be executed depending on whether or not the content is specified on the basis of the information on the status of the user.

5. The information processing device according to claim 3,
wherein the control unit changes a usable time of the content to be executed depending on whether or not the content is specified on the basis of the information on the status of the user.

6. The information processing device according to claim 3,
wherein the control unit changes a condition for obtaining usage authorization of the content to be executed depending on whether or not the content is specified on the basis of the information on the status of the user.

7. The information processing device according to claim 6,
wherein the condition is a condition in which a fee charged to obtain the usage authorization of the content is paid, and a change in the condition is a change in an amount of the fee.

8. The information processing device according to claim 1,
wherein the control unit determines the content specified on the basis of the non-operation information of the user in accordance with a characteristic of the user device.

9. The information processing device according to claim 1,
wherein the control unit changes display of the content specified on the basis of the non-operation information of the user in accordance with a characteristic of the user device.

10. The information processing device according to claim 1,
wherein, in a case where the user device includes a plurality of user devices, the control unit changes content to be executed for each of the user devices.

11. The information processing device according to claim 1,
wherein the control unit changes a condition for obtaining usage authorization of the content to be executed in accordance with a usage history of the content.

12. The information processing device according to claim 11,
wherein the control unit changes the condition for obtaining the usage authorization of the content to be executed in accordance with a usage amount of the content.

13. The information processing device according to claim 11,
wherein the control unit changes the condition for obtaining the usage authorization of the content to be executed in accordance with a degree of achievement of a use purpose of the content.

14. The information processing device according to claim 11,
wherein, before processing for obtaining the usage authorization of the content to be executed is executed, the control unit notifies the user of execution of the processing.

15. The information processing device according to claim 1,
wherein, in a case where content written in the information on content exists in the user device, the control unit causes the content to be read out, and, in a case where content written in the information on content does not exist in the user device, the control unit causes the content to be acquired from a device different from the user device.

16. The information processing device according to claim 15,
wherein, in a case where the control unit causes the content to be acquired from the device different from the user device because the content does not exist in the user device, when the content is read out a predetermined plurality of times or more, the control unit causes processing for obtaining usage authorization of the content to be executed.

17. The information processing device according to claim 1,
wherein, in a case where the operated content satisfies a predetermined condition for automatically deleting the content, the control unit causes the content to be deleted on the basis of the condition.

18. The information processing device according to claim 1,
wherein, on the basis of comparison information obtained by comparing the information of the content specified on the basis of the non-operation information of the user with the information on content stored on the user device used by the user, the control unit changes the processing content of the content specified on the basis of the non-operation information of the user.

19. An information processing method comprising
on the basis of information of content specified on the basis of non-operation information of a user and information on content stored on a user device used by the user, changing processing content of the content specified on the basis of the non-operation information of the user.

20. A computer program for causing a computer to execute
on the basis of information of content specified on the basis of non-operation information of a user and information on content stored on a user device used by the user, changing processing content of the content specified on the basis of the non-operation information of the user.
